(19) Europäisches Patentamt
European Patent Office
Office européen des brevets

(11) EP 3 426 059 B1

(12) **FASCICULE DE BREVET EUROPEEN**

(45) Date de publication et mention de la délivrance du brevet:
**21.01.2026 Bulletin 2026/04**

(21) Numéro de dépôt: **17715212.1**

(22) Date de dépôt: **07.03.2017**

(51) Classification Internationale des Brevets (IPC):
***A23L 11/30*** *(2016.01)* ***A23J 3/34*** *(2006.01)*
***A23L 33/185*** *(2016.01)* ***A23L 2/395*** *(2006.01)*
***A23L 2/66*** *(2006.01)* ***A23J 1/14*** *(2006.01)*
***A23J 1/20*** *(2006.01)* ***A23J 3/14*** *(2006.01)*
***A23L 11/00*** *(2025.01)* ***A23C 9/13*** *(2006.01)*
***A23C 11/10*** *(2025.01)* ***A23C 20/00*** *(2025.01)*
***A23C 20/02*** *(2025.01)*

(52) Classification Coopérative des Brevets (CPC):
**A23L 33/185; A23C 9/1232; A23C 9/1315; A23C 11/06; A23C 13/125; A23C 19/093; A23J 3/14; A23L 2/66; A23L 9/12; A23L 9/24; A23L 11/05; A23L 11/60;** A23C 2260/152; A23C 2260/154

(86) Numéro de dépôt international:
**PCT/FR2017/050496**

(87) Numéro de publication internationale:
**WO 2017/153669 (14.09.2017 Gazette 2017/37)**

(54) **FORMULATIONS NUTRITIONNELLES DE TYPE YAOURT, CREME, CREME DESSERT ET DESSERT GLACE COMPRENANT UN ISOLAT DE PROTEINES DE POIS AINSI QUE L'UTILISATION DE LA FORMULATION COMME SOURCE PROTÉIQUE**

NAHRUNGSFORMULIERUNGEN WIE JOGHURT, SAHNE, CREMESÜSSSPEISEN ODER GEFRORENE SÜSSSPEISEN MIT EINEM ERBSENPROTEINISOLAT UND VERWENDUNG DER FORMULIERUNG ALS PROTEINQUELLE

NUTRITIONAL FORMULATIONS SUCH AS A YOGHURT, CREAM, CREAM DESSERT OR FROZEN DESSERT, COMPRISING A PEA PROTEIN ISOLATE, AND THE USE OF THE FORMULATION AS A SOURCE OF PROTEIN

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.03.2016 FR 1651865**
**29.04.2016 FR 1653861**
**08.07.2016 FR 1656605**

(43) Date de publication de la demande:
**16.01.2019 Bulletin 2019/03**

(73) Titulaire: **Roquette Frères**
**62136 Lestrem (FR)**

(72) Inventeurs:
- **BARATA, Manuel**
  **62620 Maisnil les Ruitz (FR)**
- **GUILLEMANT, Marilyne**
  **62120 Aire Sur La Lys (FR)**
- **MORETTI, Emmanuelle**
  **59800 Lille (FR)**
- **MULLER, Elsa**
  **62400 Bethune (FR)**
- **DELEBARRE, Marie**
  **62136 La Couture (FR)**

(74) Mandataire: **Plasseraud IP**
**104 Rue de Richelieu**
**CS92104**
**75080 Paris Cedex 02 (FR)**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 426 059 B1

(56) Documents cités:

EP-A1- 2 984 936
WO-A1-2007/017572
WO-A1-2007/017572
WO-A1-2008/049385
US-A- 5 520 935
US-A- 5 520 935
US-A1- 2004 131 744
US-A1- 2014 010 947
US-A1- 2015 079 235
US-A1- 2015 368 293
US-A1- 2015 368 293
US-A1- 2016 135 482

- YOUSSEEF MANHAL ET AL: "Fermentation of cow milk and/or pea milk mixtures by different starter cultures: Physico-chemical and sensorial properties", LWT- FOOD SCIENCE AND TECHNOLOGY, ACADEMIC PRESS, UNITED KINGDOM, vol. 69, 29 January 2016 (2016-01-29), pages 430 - 437, XP029444841, ISSN: 0023-6438, DOI: 10.1016/J.LWT.2016.01.060
- ANONYMOUS: "Peach Melba Style Twist Ice Cream Cones with Raspberry Sauce", 1 August 2015 (2015-08-01), pages 1 - 4, XP055718211, Retrieved from the Internet <URL:https://www.gnpd.com/> [retrieved on 20200727]
- RAFFAEL OSEN ET AL: "High moisture extrusion cooking of pea protein isolates: Raw material characteristics, extruder responses, and texture properties", JOURNAL OF FOOD ENGINEERING, vol. 127, 4 December 2013 (2013-12-04), AMSTERDAM, NL, pages 67 - 74, XP055331887, ISSN: 0260-8774, DOI: 10.1016/j.jfoodeng.2013.11.023
- RAFFAEL OSEN ET AL: "High moisture extrusion cooking of pea protein isolates: Raw material characteristics, extruder responses, and texture properties", JOURNAL OF FOOD ENGINEERING, vol. 127, 4 December 2013 (2013-12-04), GB, pages 67 - 74, XP055331887, ISSN: 0260-8774, DOI: 10.1016/j.jfoodeng.2013.11.023

## Description

### DOMAINE TECHNIQUE DE L'INVENTION

La présente invention concerne des formulations nutritionnelles comprenant un isolat de protéines de pois.
Plus particulièrement, l'invention concerne l'application de ces formulations nutritionnelles :

- en laits fermentés de type yaourts (brassés, à la grecque, à boire...)
- en crèmes laitières/végétales (telle que la crème pour café ou « coffee whitener »), crèmes desserts, desserts glacés ou sorbets.

### CONTEXTE DE L'INVENTION

Dans le cadre de la végétalisation des produits du marché et de la réduction de coût, il peut être proposé de développer de nouvelles solutions à base de protéines de pois pour permettre de trouver une alternative aux protéines de lait.
Pour cela, les protéines de pois doivent répondre à certaines fonctionnalités telles qu'une bonne solubilité, une faible viscosité en solution, une bonne résistance aux traitements thermiques pour les liquides traités thermiquement ainsi qu'une bonne stabilité de la viscosité au cours du temps. Elles doivent aussi répondre aux recommandations nutritionnelles recommandées par la FAO/WHO, en termes de profil en acides aminés et en profil de digestibilité.

*Les laits ou desserts fermentés type yaourts brassés, à la Grecque, fermes*

Un yaourt, yogourt ou yoghourt est un lait ensemencé par des ferments lactiques afin de l'épaissir et de le conserver plus longtemps.
Pour s'appeler yaourt il doit contenir obligatoirement, et uniquement, deux ferments spécifiques, le *Lactobacillus delbrueckii subsp bulgaricus* et le *Streptococcus thermophilus,* qui lui donnent sa spécificité de goût, sa texture et apportent aussi certains bénéfices nutritionnels et de santé.
D'autres laits fermentés (à texture de yaourt) ont été créés au cours des dernières années. Ils peuvent contenir ou pas ces deux bactéries, et en plus des souches telles que *Lactobacillus acidophilus, Lactobacillus casei, Bifidobacterium bifidum, B. longum, B. infantis* et *B. breve.*
Les yaourts sont ainsi une excellente source de probiotiques, c'est à dire de microorganismes vivants qui, lorsqu'ils sont ingérés en quantité suffisante, exercent des effets positifs sur la santé, au-delà des effets nutritionnels traditionnels.
Qu'il soit ferme, brassé ou liquide, il conserve son appellation de yaourt, car c'est en effet, outre les définitions de la Réglementation, sa fabrication qui conditionne sa texture finale.
Ainsi, pour obtenir un yaourt ferme, on ensemence directement le lait dans le pot.
Tandis que dans le cas du yaourt brassé (dit aussi « bulgare »), le lait est ensemencé dans une cuve, puis brassé avant d'être versé dans son pot.
Enfin, le yaourt liquide, dit aussi yaourt à boire, est brassé puis battu jusqu'à l'obtention de la texture adéquate et versé dans des bouteilles.
Mais il existe également d'autres types de yaourts nature, comme les yaourts à la grecque, de texture plus épaisse.
Le pourcentage en matières grasses peut également jouer sur la texture du yaourt, qui peut être fabriqué à base de lait entier, demi-écrémé ou écrémé (une étiquette ne comportant que le mot « yaourt » désigne obligatoirement un yaourt réalisé avec du lait demi-écrémé).
Dans tous les cas, sa Date Limite de Consommation (D.L.C) ne peut excéder 30 jours et il doit toujours être conservé au réfrigérateur entre 0° et 6°.
On distingue ainsi trois principales classes de yaourt :

◦ *Yaourt brassé*

Plus liquide, il est souvent plus acidulé que le yaourt nature. Seule sa texture diffère. On le nomme aussi yaourt bulgare - en référence aux origines supposées du yaourt et au *Lactobacillus bulgaricus,* l'un des deux ferments à l'œuvre dans la transformation du lait en yaourt. Il est fabriqué en cuve avant d'être conditionné en pots.
Il est particulièrement adapté à la réalisation de boissons, comme les lassis, les cocktails de fruits...

◦ *Yaourt à la grecque*

Particulièrement épais, c'est un yaourt nature très égoutté (technique traditionnelle) ou enrichi de crème. Gourmand, très savoureux, il est indispensable à la réalisation du tsatsiki et pour tous les plats d'Europe de l'Est, et tout simplement mélangé à des fines herbes, c'est un délicieux dip d'apéritif. A froid, il peut se substituer à la crème fraîche épaisse.

◦ *Yaourt à boire*

S'il existe nature, il est le plus souvent sucré et aromatisé, et fabriqué avec un yaourt brassé battu. Imaginé en 1974, il a permis aux adolescents de renouer avec le plaisir du lait, en dégustant le yaourt sans cuillère, à même la bouteille. Il existe depuis peu également en « yaourt à verser », en brique de 950 g, pour ceux qui veulent associer céréales et yaourts au petit déjeuner.
Peu énergétique - de 52 kcal pour un yaourt à 0% fabriqué à partir de lait écrémé ; à 88 kcal pour un yaourt au lait entier - le yaourt « nature » est naturellement peu riche en matières grasses et en glucides, mais contient des protéines en quantité intéressante. C'est également une source de micronutriments (notamment calcium et phosphore) ainsi que de vitamines B2, B5, B12 et A. Constitué à 80% d'eau, le yaourt participe activement à l'hydratation du corps.
La consommation régulière de yaourt est ainsi reconnue pour améliorer la digestion et l'absorption du lactose (avis du 19 octobre 2010 de l'EFSA). D'autres études montrent des bénéfices potentiels sur l'amélioration des diarrhées des enfants, et du système immunitaire chez certaines personnes comme les personnes âgées.
Toutefois, la consommation de lait de vache est de plus en plus critiquée, remise en question et on assiste à un nombre croissant de personnes qui décident tout simplement de l'éliminer de leur alimentation, pour des raisons par exemple d'intolérance au lactose, ou des problèmes d'allergénicité.
Des solutions de yaourts base laits végétaux ont donc été proposées, car les laits végétaux sont beaucoup plus digestes que le lait de vache, sont riches en vitamines, minéraux et en acides gras non saturés.
Dans la suite de notre exposé, par souci de simplicité, nous continuerons à employer le terme « yaourt » même si l'origine des protéines n'est pas laitière (officiellement, les « yaourts » qui sont fabriqués à partir d'ingrédients autres que du lait fermenté, des ingrédients laitiers, ou des ferments classiques de type *Lactobacillus delbrueckii subsp bulgaricus* et *Streptococcus thermophilus* n'ont pas le droit à cette appellation).
La source végétale la plus usitée est le soja. Cependant, même si le lait de soja présente la plus grande richesse en calcium et en protéines, il est également très indigeste ; c'est pourquoi il est déconseillé pour les enfants.
De plus, il n'est pas non plus conseillé d'abuser des produits à base de soja car leurs effets sur la santé peuvent être contre-productifs lorsqu'ils sont consommés en grande quantité.
Par ailleurs, il est communément admis que 70 % de la production mondiale du soja est OGM.

*Les crèmes laitières pour crème à café, beurre, fromage, crèmes Chantilly, sauces, nappages, décoration de gâteaux*

Les crèmes laitières sont des produits à plus de 30 % de matière grasse (MG) obtenus par concentration du lait, se présentant sous la forme d'une émulsion de gouttelettes d'huile dans le lait écrémé. Elles peuvent être utilisées pour différentes applications, soit directement comme produit de consommation (utilisée par exemple comme crème à café) ou comme matière première en industrie pour la fabrication d'autres produits tels que le beurre, le fromage, les crèmes Chantilly, les sauces, les crèmes glacées, ou encore les nappages et la décoration de gâteaux.
Il existe différentes variétés de crèmes : fraîche, allégée, liquide, épaisse, pasteurisée. Les crèmes se distinguent selon leur teneur en matière grasse, leur conservation et leur texture.
La crème crue est la crème issue de la séparation du lait et de la crème, directement après l'écrémage et sans passer par l'étape pasteurisation. Elle est liquide et contient de 30 à 40% de matières grasses.
Toujours de texture liquide, la crème pasteurisée a subi le processus de pasteurisation. Elle a donc été chauffée à 72°C pendant une vingtaine de seconde afin d'éliminer les microorganismes indésirables pour l'homme. Cette crème se prête particulièrement bien au foisonnement. Elle prend ainsi une texture plus légère et volumineuse en étant battue pour y incorporer des bulles d'air. Elle est parfaite pour les chantilly par exemple.
Certaines crèmes liquides vendues en magasins sont dites de longue conservation. Elles peuvent être stockées plusieurs semaines dans un endroit frais et sec. Pour se conserver aussi longtemps, ces crèmes ont été soit stérilisées, soit chauffées selon le procédé UHT. Pour la stérilisation, il s'agit de chauffer la crème pendant 15 à 20 minutes à 115°C. Avec le procédé UHT (ou Ultra Haute Température), on chauffe la crème pendant 2 secondes à 150°C. La crème est ensuite rapidement refroidie, ce qui a pour résultat de mieux conserver ses qualités gustatives.
La crème est naturellement liquide, une fois qu'elle est séparée du lait, après écrémage. Afin qu'elle prenne une texture épaisse, elle passe par l'étape de l'ensemencement. On incorpore ainsi des ferments lactiques qui, après maturation, donneront à la crème cette texture plus épaisse et ce goût plus acide et plus riche.

À côté des technologies traditionnelles (millénaires ou centenaires) d'obtention de la crème à partir du lait, se sont développées depuis cette dernière décennie, des technologies d'assemblage ou de reconstitution de la crème à partir d'ingrédients laitiers.

Ces technologies nouvelles de reconstitution des crèmes laitières présentent des avantages évidents dans les procédés industriels, par rapport à la crème fraiche : faible coût de stockage des matières premières, plus grande flexibilité dans la formulation, indépendance vis-à-vis de la saisonnalité de la composition du lait.

Aussi, les crèmes laitières reconstituées peuvent bénéficier de l'image de naturalité généralement attribuée aux produits laitiers, puisque la réglementation exige pour leur fabrication l'utilisation exclusive d'ingrédients laitiers avec ou non adjonction d'eau potable et les mêmes caractéristiques de produit fini que la crème de lait (Codex Alimentarius, 2007).

Le développement du domaine des crèmes laitières reconstituées a ouvert de nouvelles possibilités dans la formulation des crèmes, et plus particulièrement celle de la naissance du concept des crèmes végétales.

Les crèmes végétales sont des produits similaires aux crèmes laitières dont la matière grasse laitière est remplacée par la matière grasse végétale (Codex Alimentarius, codex Stan 192, 1995).

Elles sont formulées au départ de quantités bien définies d'eau, de matières grasses végétales, de protéines laitières ou végétales, de stabilisants, d'épaississants et d'émulsifiants de faible poids moléculaire.

Les paramètres physico-chimiques, tels que la granulométrie, la rhéologie, la stabilité et l'aptitude au foisonnement sont les caractéristiques qui intéressent au premier chef les industriels et les chercheurs du domaine de la substitution des crèmes laitières par des crèmes végétales.

Par exemple, comme dans toute émulsion, la taille des gouttelettes dispersées (granulométrie) est un paramètre clé de la caractérisation des crèmes car il présente un impact non négligeable, d'une part, sur d'autres propriétés physico-chimiques telles que la rhéologie et la stabilité, et d'autre part, sur les propriétés sensorielles telles la texture et la couleur des crèmes.

L'influence du type d'émulsifiant inclut tant les émulsifiants de faible poids moléculaire tels les mono, diglycérides et phospholipides, que ceux de haut poids moléculaire comme les protéines, ainsi que des interactions protéines/émulsifiants de faible poids moléculaire.

Il est ainsi connu que la concentration de l'émulsifiant lipidique influence également la taille des gouttelettes des crèmes. Dans les systèmes stabilisés par des protéines, une concentration très élevée de l'émulsifiant lipidique peut entrainer une forte augmentation de la taille moyenne des gouttelettes, du fait d'une forte agrégation des gouttelettes suite à la désorption des protéines.

Le type de protéines utilisées dans la formulation peut également affecter la granulométrie des crèmes. En effet, dans les mêmes conditions d'émulsification, les crèmes à base de sources protéiques riches en caséines, telles la poudre de lait écrémé, présentent en général des diamètres moyens de gouttelettes plus petits que celles à base de sources protéiques riches en protéines de lactosérum, telles que la poudre de lactosérum.

Les différences de granulométrie entre les crèmes préparées à partir des deux sources protéiques (caséines ou protéines de lactosérum) sont liées aux différences de propriétés interfaciales à l'interface huile/eau, les caséines ayant une plus grande capacité d'abaissement de la tension interfaciale que les protéines de lactosérum.

Par ailleurs, la concentration en protéines dans la formulation influence la granulométrie des crèmes. En effet, il a été démontré qu'à fraction massique d'huile constante, la taille des gouttelettes diminue avec la concentration en protéines jusqu'à une certaine concentration au-delà de laquelle la taille varie très peu.

La présence simultanée des molécules amphiphiles de poids moléculaire faible (surfactif) et élevé (protéines) dans une formulation de crèmes se traduit généralement par une diminution de la taille des gouttelettes au cours de l'émulsification. Par ailleurs, l'adsorption compétitive à l'interface huile/eau entre tensioactifs et protéines conduit généralement au cours de la maturation à une désorption des protéines de la surface des gouttelettes, ce qui ce qui peut entrainer des modifications granulométriques.

Finalement, il apparait que les conditions d'émulsification, le choix des ingrédients (tant protéiques que lipidiques) utilisés dans la formulation, ainsi que la température, influencent les propriétés finales des crèmes.

Il apparait que les crèmes végétales peuvent conduire à de nouvelles propriétés technofonctionnelles. Ainsi, la résistance à la congélation pouvant conférer une grande stabilité aux crèmes glacées en est un exemple. Elles peuvent également présenter une stabilité en liaison chaude ou froide, ce qui est un avantage considérable, puisque ces crèmes peuvent être utilisées indifféremment dans la préparation de plats chauds ou froids.

Si les crèmes végétales peuvent apporter de nouvelles fonctionnalités et montrer des propriétés texturales comparables voire plus intéressantes que celles des crèmes laitières, il n'en demeure pas moins qu'elles peuvent présenter des défauts sensoriels, notamment par rapport à leur gout et leur odeur, même parfois après l'ajout d'arômes (cas des protéines de soja, ou des protéines de pois).

La société Demanderesse a donc mené des travaux sur les crèmes végétales (dont le domaine des « non dairy » coffee creamers) afin d'approfondir les connaissances sur l'influence de leurs ingrédients, comme les protéines de pois et leurs interactions entre eux (protéines-protéines, protéines-matière grasse, protéines-eau, etc.) sur les propriétés finales des crèmes.

La société Demanderesse a également développé des recettes de fromages végétaliens.

Le fromage est normalement un aliment obtenu à partir de lait coagulé ou de crème laitière, puis d'un égouttage suivi ou non de fermentation et éventuellement d'affinage.

Le fromage est ainsi fabriqué à partir de lait de vache principalement, mais aussi de brebis, de chèvre, de bufflonne ou d'autres mammifères. Le lait est acidifié, généralement à l'aide d'une culture bactérienne. Une enzyme, la présure, ou un substitut comme de l'acide acétique ou du vinaigre, est ensuite adjointe afin de provoquer la coagulation et former le lait caillé et le petit-lait.

Il est connu de réaliser des alternatives végétaliennes au fromage (notamment des fromages de type mozzarella), en substituant les caséinates de lait par des amidons natifs et modifiés, plus particulièrement des amidons stabilisés acétates.

Cependant, il est encore recherché à améliorer le caractère de « déchiquetabilité » ou la capacité à être émietté (terme anglosaxon de « shreddability »), la fonte, la stabilité au gel / dégel, la saveur (notamment aux Etats-Unis pour les préparations de pizza).

Des essais ont été menés en combinant huile, amidons modifiés et protéines de pois sans donner plein satisfaction.

La société Demanderesse a trouvé que l'utilisation des isolats de protéines de pois conforme à l'invention permettait de répondre à ce cahier des charges, notamment en termes de « shredability », fonte et saveur.

*Les crèmes glacées*

Les crèmes glacées contiennent classiquement des graisses animales ou végétales, des protéines (protéines de lait, protéines d'œuf) et/ou du lactose.

Les protéines jouent alors le rôle de texturant en plus d'apporter du goût à la crème glacée.

Elles sont essentiellement produites par la pesée des ingrédients, leur pré-mélange, leur homogénéisation, pasteurisation, réfrigération à 4°C (permettant la maturation), puis la congélation avant emballage et stockage.

De nombreuses personnes souffrent cependant d'une intolérance aux produits laitiers ou d'autres ingrédients d'origine animale qui les empêchent de consommer du lait ou de la crème glacée traditionnelle.

Pour ce groupe de consommateurs, il n'y a jusqu'à présent pas d'alternative à la crème glacée contenant du lait ayant une valeur sensorielle comparable.

Dans les préparations de crème glacée jusqu'ici connues présentant des ingrédients végétaux, principalement à base de soja, des tentatives ont été faites pour remplacer les émulsifiants animaux par des protéines végétales.

Des protéines végétales séchées, obtenues dans les procédés classiques d'extraction aqueuse ou hydro-alcoolique et après le séchage sous forme de poudre ont été souvent utilisées.

Ces protéines se révèlent être des mélanges hétérogènes de polypeptides, dont certaines fractions possèdent à des degrés variables des propriétés particulièrement bonnes comme émulsifiants ou agents de formation de gel, comme agents de liaison de l'eau, de la mousse ou des agents améliorant la texture.

Jusqu'à présent, les produits de protéines végétales ont été obtenus presque exclusivement à partir de fèves de soja, sans fractionnement en fonction de leurs propriétés fonctionnelles spécifiques.

Par ailleurs, le gout des crèmes glacées préparées à partir desdites protéines de soja est rédhibitoire.

La société Demanderesse a donc mené des travaux sur les crèmes végétales et a trouvé que les isolats de protéines de pois selon l'invention permettaient de répondre au cahier des charges recherché.

Le document US5520935A divulgue un isolat de protéine de pois qui trouve une application dans des boissons et des aliments, mais qui diffère de celui défini dans la revendication 1. De plus, l'isolat de protéine du US5520935A présente un degré d'hydrolyse plus élevé.

## RESUME DE L'INVENTION

La présente invention propose de nouvelles formulations nutritionnelles de type yaourt, crème, crème dessert, fromage ou crème glacé contenant un isolat de protéines de pois susceptible de se substituer en tout ou partie à la protéine de lait ou de soja, neutre en goût, et qui présentent des propriétés adaptées telles qu'une faible viscosité et une amélioration de la solubilité de la protéine de pois.

En particulier, dans le contexte de formulations nutritionnelles du type laits fermentés de type yaourts (brassés, à la grecque, à boire...) ou crèmes laitières/végétales (tel en « coffee whitener »), desserts glacés ou sorbets, la capacité émulsifiante dudit isolat de protéines de pois est d'intérêt pour son utilisation dans les matrices de ces produits laitiers en substitution partielle ou totale des protéines laitières. Dans le contexte de fromages végétaliens, l'ajout dudit isolat de protéines de pois permet d'améliorer la shreddability (la capacité à être émietté), la fonte et la saveur des fromages végétaliens de type Mozzarella.

L'invention conduit également à améliorer le goût de la protéine de pois (diminution des notes pois, notes vertes) pour être plus neutre dans les applications/produits finis (à forte teneur en protéine et standards) utilisant l'isolat de protéines de pois en substitution partielle ou totale de protéines de lait, propriété importante pour tous les types de produits laitiers, boissons laitières ou végétales, laits fermentés de type yaourts, crèmes laitières ou végétales, crème dessert, fromage ou crème glacé ...

L'invention a précisément pour objet une formulation nutritionnelle selon la revendication 1.

De préférence, l'isolat de protéines de pois présente une digestibilité exprimée selon le Coefficient d'Utilisation Digestive (CUD) d'une valeur comprise entre 93,5 et 95 %.

L'isolat de protéines de pois présente un degré d'hydrolyse (DH) compris entre 5 et 10 %.

En particulier, l'isolat de protéines de pois est présenté, selon le test SYMPHID, comme une protéine de « viscosité rapide », traduisant une assimilation duodénale rapide des acides aminés constitutifs dudit isolat.

De préférence, l'isolat de protéines de pois a été pasteurisé à haute température et de courte durée avant d'être séché par atomisation.

Dans un mode de réalisation de la présente invention, l'isolat de protéines de poids représente 0,1-10% en poids de la formulation nutritionnelle, de préférence de 0,5-6% en poids.

Dans un mode de réalisation de la présente invention, l'isolat de protéines de poids représente 20-30%, 40-50%, 50-60%, 60-70%, 70-80%, 80-90% ou 90-100% en poids de la protéine totale dans la formulation nutritionnelle.

Dans un mode de réalisation de la présente invention, la formulation nutritionnelle comprend au moins un isolat de protéine de pois et au moins une protéine de lait. La protéine de lait représente de préférence au moins 10, 15, 20, 25, 30, 40, 45, 50, 60, 70 ou 80 % en poids par rapport au poids total de protéines, en particulier dans la formulation nutritionnelle en poudre.

Dans un autre mode de réalisation de la présente invention, la formulation nutritionnelle comprend au moins un isolat de protéine de pois, une protéine végétale autre, telle qu'une protéine de soja, riz et/ou blé, et au moins une protéine de lait.

L'isolat de protéines de pois représente :

- ◦ entre 0,1 % et 100 % de la protéine totale pour les laits fermentés de type yaourts, de préférence entre 20-100%, 30-100%, 40-100%, 50 et 100 %, 60-100%, 70-100%, 80-100%, 20-60%, 30-50% ou 50-90% de la protéine totale dans la formulation nutritionnelle,
- ◦ entre 0,1 % et 100 % de la protéine totale pour les crèmes laitières, desserts glacés ou sorbets, plus particulièrement entre 50 -100 %, 60-100%, 70-100%, 80-100%
- ◦ 50-90% de la protéine totale pour les coffee whiteners et
- ◦ 20-100%, 30-100%, 40-100%, 50-100%, ou 40-90% de la protéine totale pour les crèmes laitières, desserts glacés ou sorbets.

Pour les fromages végétaliens, environ 5 % en poids d'isolats de protéines de pois dans la recette suffisent à améliorer leurs caractéristiques techniques et organoleptiques.

Par exemple, l'isolat de protéines de pois selon la présente invention peut représenter 0,1-10%, 10-20%, 20-30%, 40-50%, 50-60%, 60-70%, 70-80%, 80-90% ou 90-100%, en particulier en poids, de la protéine totale dans la formulation nutritionnelle, ou une quelconque combinaison de ces gammes de pourcentages.

L'invention a également pour objet une formulation nutritionnelle telle que décrite ci-dessus, pour une utilisation comme source protéique unique ou comme complément alimentaire, destiné aux nourrissons, enfants et/ou adultes.

Elle a encore pour objet l'utilisation de cette formulation nutritionnelle comme source protéique unique ou comme complément alimentaire, destiné aux nourrissons, enfants et/ou adultes.

## DESCRIPTION DETAILLEE DE L'INVENTION

La présente invention concerne des formulations nutritionnelles comprenant un isolat de protéines de pois selon la présente invention. Elle concerne également l'isolat selon la présente invention, et en particulier son utilisation de l'isolat selon la présente invention pour la préparation des formulations nutritionnelles.

Plus particulièrement, l'invention concerne l'application de ces formulations nutritionnelles en laits fermentés de type yaourts (brassés, à la grecque, à boire) et en crèmes laitières ou végétales, crèmes dessert, desserts glacés ou sorbets ou en fromages.

Il a été trouvé que l'incorporation dans ladite formule nutritionnelle de l'isolat de protéines de pois de l'invention permet d'améliorer le goût de la protéine de pois en diminuant la note pois et la note végétale.

Tous les pourcentages, parties et rapports, tel qu'utilisé ici, se rapportent au poids de la formulation totale, sauf indication contraire.

Les formulations alimentaires et les procédés de fabrication correspondant de la présente invention peuvent comprendre, consister ou consister essentiellement en les éléments essentiels de l'invention telle que décrite ici, ainsi que tout élément supplémentaire ou facultatif décrit ici ou autrement utiles dans les applications de la formulation nutritionnelle.

Dans le domaine de la substitution (totale ou partielle) des protéines laitières dans les yaourts, crèmes laitières, crèmes glacées ou sorbets, il est recherché des protéines végétales dont les propriétés fonctionnelles sont équivalentes, voire améliorées par rapport aux protéines laitières.

Le terme « propriétés fonctionnelles » signifie dans la présente demande toute propriété non nutritionnelle qui influence l'utilité d'un ingrédient dans un produit laitier.

Ces diverses propriétés contribuent à l'obtention des caractéristiques finales désirées du produit laitier. Quelques-unes de ces propriétés fonctionnelles sont la solubilité, la viscosité, les propriétés moussantes, les capacités émulsifiantes.

Les protéines jouent également un rôle important dans les propriétés sensorielles des matrices alimentaires dans lesquelles elles sont utilisées, et il existe une réelle synergie entre les propriétés fonctionnelles et les propriétés sensorielles.

Les propriétés fonctionnelles des protéines ou fonctionnalités sont donc les propriétés physiques ou physico-chimiques qui ont une incidence sur les qualités sensorielles des systèmes alimentaires générées au cours des transformations technologiques, de la conservation ou des préparations culinaires domestiques.

On constate quel que soit l'origine de la protéine qu'elle intervient sur la couleur, la flaveur et/ou la texture d'un produit. Ces caractéristiques organoleptiques interviennent de façon déterminante dans le choix du consommateur et elles sont dans ce cas largement prises en compte par les industriels.

La fonctionnalité des protéines est le résultat d'interactions moléculaires de ces dernières avec leur environnement (autres molécules, pH, température...).

Ici, il s'agit des propriétés de surface qui regroupent les propriétés d'interaction des protéines avec d'autres structures polaires ou apolaires en phase liquide ou gazeuse : cela recouvre les propriétés émulsifiantes, moussantes...

La société Demanderesse a constaté qu'il existait un réel besoin, non satisfait, de disposer d'une formulation nutritionnelle possédant des propriétés fonctionnelles intéressantes, pouvant être employée dans la confection de produits laitiers comme un substitut au moins partiel des protéines laitières.

Les isolats de protéines de pois, comme source de protéines, notamment pour leurs propriétés d'amélioration du goût, sont particulièrement bien adaptés à cet usage.

Plus particulièrement, dans ces domaines d'application particuliers, i.e. :

- ◦ laits fermentés de type yaourts (brassés, à la grecque, à boire...)
- ◦ crèmes laitières/végétales (tel en « coffee whitener »),
- ◦ desserts glacés ou sorbets,

la société Demanderesse a trouvé que :

- En matière de « non dairy coffee whiteners » ou encore appelés « non dairy coffee creamers », comme il sera démontré ci-après :

    - ◦ La viscosité des émulsions après pasteurisation avant séchage est plus proches du témoin lait que les protéines de pois de type NUTRALYS®, ce qui permet de sécher une émulsion de faible viscosité à haute matière sèche ;
    - ◦ La floculation dans le café semble être moins importante avec les isolats de protéines de pois conformes à l'invention, qu'avec les protéines de pois de type NUTRALYS® mais ceci peut être corrélé avec l'amélioration de leur solubilité au pH acide du café, ou par une meilleure stabilité aux ions divalents contenus dans l'eau de reconstitution du café.
    Par ailleurs, de manière facultative, pour améliorer les pouvoirs floculants, il peut être choisi d'ajouter des agents tamponnant tels que des citrates de sodium, des sels type NaCl (sel) qui favorise la solubilité des protéines, ou des agents complexant des ions divalents plus performants que les sels de phosphates.
    - ◦ Quant au pouvoir émulsifiant desdits isolats pour cette application particulière, il peut être avantageusement choisi d'utiliser des émulsifiants complémentaires, comme par exemple le E472 (Esters monoacétyltartriques et diacétyltartriques des mono- et diglycérides d'acides gras), ou de faire varier les concentrations en E471, ou en ajustant la concentration en protéines ou ajustant le procédés d'homogénéisation.

- En matière de « yaourts brassés », dans les recettes de fabrication telles que celles qui seront exemplifiées, ci-après,

    - o La température avant homogénéisation peut varier entre 65 à 80°C,

◦ La pression d'homogénéisation peut varier entre 150 à 250 bars,
o La température de pasteurisation peut varier entre 80-85°C pendant 30min à 90-95°C de 5 à 10min,
◦ La température de fermentation peut varier entre 30 à 45°C, préférentiellement de 38 à 42°C
◦ Il est possible d'élargir le type de ferments à tous ceux utilisés dans le domaine des yaourts comme spécifié dans la réglementation « yaourt. »

Quant à la formulation desdits yaourts :

◦ En plus de l'amidon modifié et de la pectine, comme stabilisants, il peut être choisi de la graine de caroube, ou de la gomme guar en différentes proportions,
◦ L'amidon retenu est un amidon modifié, préférentiellement un amidon qui déploie peu de viscosité, voire complètement solubilisé. Sa proportion peut varier entre 2,5 et 5 % en poids de la composition totale, de préférence entre 2,8 et 3,5 %.
◦ Il peut être avantageusement choisi d'ajouter des arômes, permettant d'apporter une note « plus laitière », lactiques, ou des préparations de fruits, même si la note végétale est bien plus atténuée avec les isolats de protéines de pois selon l'invention en regard des protéines de pois.

- En matière de « yaourts à boire », les recettes selon l'invention sont similaires à celles mises en œuvre pour les « yaourts brassés », la quantité de protéines est cependant plus faible que celle des yaourts brassés, la quantité d'amidon est choisie préférentiellement entre 1,5% et 2,5% en poids de la composition totale, et l'amidon peut être dans un état solubilisé ou non pour cette matrice.

*Nature des isolats de protéines de pois*

Les isolats de protéines de pois selon l'invention sont tout d'abord caractérisés par leur teneur en acides aminés libres (déterminée selon la norme NF EN ISO13903:2005).
Cette valeur est comprise entre 0,5 et 2 %. Par exemple, cette valeur peut être comprise entre 0,5-1%, 1-1,5% ou 1,5-2 %, ou une quelconque combinaison de ces gammes de pourcentages.
A titre comparatif, les protéines de pois (tel le NUTRALYS® S85F) présentent une teneur en acides aminés libres de l'ordre de 0,18 %.
Les isolats de protéines de pois présentent une teneur en protéines totales exprimée en N.6,25 de plus de au moins 70% en poids de produit sec, de préférence au moins 80% en poids, par exemple entre 80 et 99%, 80 et 95%, 80 et 90% ou 80 et 85%.
Les isolats de protéines de pois selon l'invention sont également caractérisés par

◦ leur profil de viscosité dans l'eau à 15 % de matière sèche et à 20°C, déterminé en fonction du taux de cisaillement ;
◦ leur profil de solubilité dans l'eau, en fonction du pH, de préférence à 20°C.

Pour la détermination du profil de viscosité dans l'eau, les mesures sont effectuées

◦ sur une solution aqueuse d'isolats de protéines de pois à 15 % de matière sèche,
◦ en rhéomètre AR2000 de la société TA Instruments,
◦ présentant une géométrie à cylindres concentriques,
◦ avec un taux de cisaillement de 0,6 $10^{-3}$ à 600 $s^{-1}$ en 3 minutes (log) et
◦ à la température de 20°C (3 min d'équilibre température avant test).

Les taux de cisaillement produits dans le rhéomètre permettent de mimer les conditions de traitement que peuvent subir les solutions d'isolat de protéines de pois selon l'invention :

◦ un taux de cisaillement de 1 à 10 $s^{-1}$ est ainsi caractéristique d'une boisson au repos (texture à la cuillère pour des produits plus visqueux),
◦ un taux de cisaillement de 40 à 50 $s^{-1}$ est la texture en bouche,
o un taux de cisaillement de 300-1000 $s^{-1}$ est équivalent au cisaillement dans des pompes d'acheminement du produit.

C'est ainsi que les isolats de protéines de pois conformes à l'invention présentent une viscosité :

o de 11 à $18.10^{-3}$ Pa.s. à un taux de cisaillement de 10 $s^{-1}$, de préférence 12 à $17.10^{-3}$ Pa.s., de manière encore plus préférée de 13 à $16 10^{-3}$ Pa.s.,

◦ de 9 à $16.10^{-3}$ Pa.s. à un taux de cisaillement à 40 $s^{-1}$, de préférence de 10 à $15.10^{-3}$ Pa.s., de manière encore plus préférée de 10 à $14.10^{-3}$ Pa.s., et

◦ de 8 à $16.10^{-3}$ Pa.s. à un taux de cisaillement de 600 $s^{-1}$, de préférence de 9 à $15.10^{-3}$ Pa.s., de manière encore plus préférée de 9,8 à $14.10^{-3}$ Pa.s.

Ce qui traduit une remarquable stabilité desdits isolats, quelle que soit la force de cisaillement qu'ils subissent.
Les isolats de protéines de pois sont ensuite caractérisés par leur profil de solubilité dans l'eau, en fonction du pH.
Le principe de la méthode utilisée est le suivant, comme il sera développé dans la partie exemple :

o suspendre l'isolat de protéines de pois à 2,5 % en poids dans de l'eau distillée,
o ajuster au pH souhaité : ici à 3, 4, 5, 6,7 ou 8 avec NaOH 0,1 N ou HCl 0,1 N,
o mélanger pendant 30 minutes à 1100 rpm,
◦ centrifuger 15 minutes à 3000 g,
o mesurer la matière sèche d'une portion du surnageant.

La solubilité des isolats de protéines de pois est ainsi :

o de 30 à 40 % dans des zones de pH de 4 à 5,
o de 40 à 70 % dans des zones de pH de 6 à 8,

ce qui traduit leur remarquable solubilité dans ces zones de pH.
A titre comparatif, les protéines de pois (tel le NUTRALYS® S85F) présentent :

o de 10 à 15 % de solubilité dans des zones de pH de 4 à 5,
o de 20 à 50 % de solubilité dans des zones de pH de 6 à 8.

Les isolats de protéines de pois sont caractérisés également par leur profil de digestibilité totale, en regard d'une protéine de pois intacte, et par leur cinétique de digestion.
Comme il sera exemplifié ci-après, la digestibilité mesurée *in vivo* permet d'attribuer aux isolats de protéines de pois selon l'invention un Coefficient d'Utilisation Digestive (CUD) d'une valeur comprise entre 93,5 et 95 %.
Pour mesurer la cinétique de digestion des isolats de protéines de pois, il est utilisé un modèle *in vitro* de digestion dynamique dans des conditions physiologiques équivalentes à l'estomac puis l'intestin grêle (voir exemple 1 section 4).
Comme il sera exemplifié ci-après, le comportement des isolats selon l'invention dans un tel modèle montre leur positionnement original entre des protéines intactes de pois (digestion de type « intermédiaire rapide ») et de lactosérum (digestion de type « rapide »).
Les isolats de protéines de pois sont enfin caractérisés dans un modèle de digestibilité *in vitro* comme des « protéines à digestibilité rapide ».
Pour obtenir ce résultat, le comportement gastrique de 5 protéines (protéines de pois, protéines de lactosérum et caséinates de sodium, et deux lots d'isolats de protéines de pois selon l'invention) est évalué dans un modèle de digestion *in vitro* (voir exemple 1 section 5).
Les cinétiques de digestion des protéines dépendent dans une large mesure du temps de séjour dans l'estomac et du temps de vidange gastrique.
La viscosité est une caractéristique importante déterminant le taux de vidange gastrique. Ainsi, les mesures de viscosité *in vitro* dans les conditions gastriques sont sélectionnées comme paramètres pertinents pour caractériser les protéines.
Les préparations protéiques sont introduites dans un système *in vitro* de simulation la digestion gastrointestinale, en l'occurrence ici le système développé par la société NIZO (système SIMPHYD pour SIMulation of PHYsiological Digestion) tel que présenté sur le site www.nizo.com dans leur brochure intitulée *Bioavailabilty of your ingredients* qui fait référence à l'article publié dans Appl Environ Microbiol. 2007, Jan;73(2) : 508-15.
Ce dispositif présente un système de mesures rhéologiques en ligne qui permet de comparer le comportement des protéines testées.
Les profils de viscosité au cours du temps sont mesurés en conditions gastriques de pH et de libération d'enzymes.
Comme il est illustré ci-après, comparées aux protéines de lactosérum (classées dans la catégorie « basse viscosité) et aux caséinates de sodium (classés dans les protéines de « haute viscosité prolongée ») :

- les protéines de pois présentent une augmentation rapide de viscosité durant l'acidification, qui revient à la ligne de base à pH 2 (protéines dites de « viscosité intermédiaire rapide »), tandis que
- les isolats de protéines de pois selon l'invention présentent une augmentation très légère de viscosité après l'acidification, diminuant ensuite pour atteindre des valeurs similaires aux protéines de petit lait, durant 30 minutes (protéines dites de « viscosité rapide »).

Basés sur leur comportement gastrique *in vitro,* les isolats de protéines de pois selon l'invention sont donc transportés rapidement dans le duodénum, ce qui résultera en une assimilation rapide de leurs acides aminés.
L'évaluation des propriétés émulsifiantes des isolats de protéines de pois est réalisée en comparaison avec les protéines de pois et les protéines de lait.
Elle a été réalisée à l'aide du granulomètre Malvern Mastersizer 2000E en voie liquide.
Le principe de la mesure est basé sur la diffraction de la lumière.
Les poudres sont mises en solution à 1 % en poids dans de l'eau azidurée sous agitation pendant 6 h à 750 rpm.
4 ml d'huile de consommation combinant 4 huiles végétales (tournesol, colza, oléisol, pépins de raisins) (par exemple huile Lesieur Isio 4) sont ajoutés à 20 ml de protéines (ou isolat de protéines) à 1 %.
L'ensemble est passé à un homogénéiseur (Ultraturax) pendant 3 minutes à 13500 rpm, puis les émulsions ainsi formées sont analysées au granulomètre afin d'en déterminer la taille des globules gras.
Comme il sera exemplifié ci-après, les isolats de protéines de pois selon l'invention présentent de meilleures propriétés émulsifiantes que les protéines laitières.
Par ailleurs, leur propriété émulsifiante équivalente aux caséinates les rend tout particulièrement intéressant pour la réalisation d'émulsions séchées type « coffee whitener ».
La présente invention est relative à l'isolat de protéines de pois tel que décrit ci-dessus et à son utilisation pour la préparation d'une formulation nutritionnelle.

*Préparation des isolats de protéines de pois selon l'invention*

La préparation des isolats de protéines de pois selon l'invention comporte une hydrolyse des protéines de pois par voie enzymatique ou non enzymatique, de manière à ce que ledit isolat de protéines de pois présente un degré d'hydrolyse (DH) compris entre 5 % et 10 %, de préférence entre 6 % et 8 %, de manière encore plus spécifique de 6,5 % à 7 %.
Dans un premier mode de réalisation, l'hydrolyse est réalisée par une endopeptidase.
Il est choisi une endopeptidase non spécifique, dérivée d'une souche d'*Aspergillus* en particulier une souche de *Aspergillus spp* ou *Aspergillus Oryzae.*
Il est choisi plus particulièrement une endopeptidase EC 3-4-11.
La quantité exacte d'enzyme ajoutée à la suspension pour obtenir les caractéristiques souhaitées des isolats de protéines de pois variera en fonction de caractéristiques spécifiques telles que:

(1) l'enzyme ou le système enzymatique utilisé;
(2) le degré final désiré d'hydrolyse; et/ou
(3) la distribution de poids moléculaire / final souhaité.

Étant donné que ces paramètres sont connus, l'homme de l'art peut facilement déterminer les conditions appropriées pour obtenir les caractéristiques désirées de l'isolat de protéines de pois.
Dans un mode de réalisation particulier, la protéine de pois initiale utilisée pour préparer l'isolat de protéines de pois selon l'invention est une composition de protéine de pois telle que décrites dans la demande WO 2007/17572 ou préparée par un procédé tel que décrit dans la demande WO 2007/17572 (l'enseignement étant incorporé par référence). Dans un mode de réalisation particulier, la composition de protéines de pois initiale est la composition commercialisée par ROQUETTE FRERES sous le nom de marque NUTRALYS® S85F.
Dans un mode de réalisation préféré de l'invention, la suspension de protéines de pois est amenée à une valeur de 5 à 20 % en poids de matière sèche, en particulier de 15 à 20 %.
La température de réaction est ajustée à une valeur comprise entre 50 et 60°C, de préférence de l'ordre de 55°C.
En règle générale, le système d'enzyme ou une enzyme est ajouté à la suspension en des quantités dans la gamme d'environ 0,3 à 1 % poids/volume.
La réaction d'hydrolyse est typiquement effectuée dans une durée souhaitée afin d'obtenir le degré d'hydrolyse et/ou le profil désiré de poids moléculaire désiré, en l'occurrence ici pendant une période d'environ 45 minutes à environ 2 h 30 minutes, de préférence d'environ 1 heure.
Une fois encore, le temps nécessaire à la réaction d'hydrolyse dépend des caractéristiques comme indiqué ci-dessus, mais peut être facilement déterminée par l'homme du métier.
Dans d'autres réalisations, la suspension contenant des protéines de pois peut être hydrolysée en utilisant des moyens non enzymatiques, par exemple par hydrolyse mécanique (physique) et/ou chimique. Cette technique est également bien connue dans l'état de l'art.

Une fois que les protéines de pois ont été hydrolysées au degré souhaité, la réaction d'hydrolyse est arrêtée, par exemple, par inactivation de l'enzyme, ou par d'autres moyens classiques.

Dans un mode de réalisation, l'inactivation de l'enzyme est effectuée par traitement thermique.

Conformément à la pratique établie, la préparation d'enzyme peut convenablement être inactivée en augmentant la température de la suspension d'incubation à une température à laquelle les enzymes deviennent inactivées, par exemple à environ 70°C pendant environ 10 minutes.

Les isolats de protéines de pois ainsi obtenus sont ensuite traités à haute température courte durée (HTST), puis pasteurisés, éventuellement concentrés à une matière sèche de 10 à 30 %, avant d'être séchés par atomisation. Par exemple, l'isolat peut être pasteurisé à une température comprise entre 130°C et 150°C pendant une période d'environ 1 seconde à environ 30 secondes.

La présente invention est ainsi relative à un isolat de protéines de pois obtenu ou susceptible d'être obtenu par le procédé tel que décrit ci-dessus.

La présente invention est également relative à une formulation nutritionnelle comprenant un isolat de protéines de pois selon l'invention ainsi qu'à l'utilisation de cet isolat pour préparer une formulation nutritionnelle.

La formulation nutritionnelle peut comprendre entre 20 et 95 % de protéines par rapport au poids total de la formulation nutritionnelle, par exemple entre 20-90%, 30-80%, ou 40-60%.

Les isolats de protéines de pois selon l'invention sont présents dans la formulation nutritionnelle selon l'invention dans une quantité allant jusqu'à 100 % en poids, notamment, dans une quantité comprise entre 52 et 60 % en poids, en particulier de la formulation nutritionnelle. Par exemple, l'isolat de protéines de pois selon la présente invention peut représenter 10-20%, 20-30%, 40-50%, 50-60%, 60-70%, 70-80%, 80-90% ou 90-100% de la protéine totale de la formulation nutritionnelle, ou une quelconque combinaison de ces gammes de pourcentages. Par exemple, l'isolat de protéines de pois selon la présente invention peut représenter 40-50%, 50-60%, 60-70%, 70-80%, 80-90% ou 90-100% de la protéine totale de la formulation, ou une quelconque combinaison de ces gammes de pourcentages.

Par ailleurs, l'isolat de protéines de pois selon la présente invention peut représenter 0,1-10%, 10-20%, 20-30%, 40-50%, 50-60%, 60-70%, 70-80%, 80-90% ou 90-100% en poids de la formulation nutritionnelle, ou une quelconque combinaison de ces gammes de pourcentages. Il représente 0,1-60%, de préférence 1-50%, 1-20% ou 1-10% ou une quelconque combinaison de ces gammes de pourcentages. De préférence, l'isolat de protéines de poids représente 0,1-10% en poids de la formulation nutritionnelle, de préférence de 0,5-6% en poids.

Dans un mode de réalisation particulier, la formulation nutritionnelle en poudre comprend une combinaison d'un isolat de protéines de pois et d'une protéine à base de lait.

Dans un exemple de ce mode de réalisation particulier, la protéine à base de lait est présente dans la formulation nutritionnelle en une quantité d'au moins 10, 15, 20, 25, 30, 40, 45 50, 60, 70 ou 80 % en poids par rapport au poids totale de protéine, de préférence d'environ 50 à 75 % en poids par rapport au poids totale de protéine, par exemple 45 % en poids par rapport au poids totale de protéine. Par exemple, la protéine à base de lait est présente dans la formulation nutritionnelle en poudre en une quantité de 10-60 %, 20-50%, 30-40% ou 50-75 % en poids par rapport au poids totale de protéine. De préférence, le reste des protéines est apporté par l'isolat de protéines de pois selon l'invention.

Dans un autre exemple de ce mode de réalisation particulier, la protéine à base de lait est présente dans la formulation nutritionnelle en liquide pour la nutrition clinique en une quantité d'au moins 10, 15, 20, 25, 30, 40, 45 ou 50 % en poids par rapport au poids totale de protéine, de préférence d'environ 50 % en poids. Par exemple, la protéine à base de lait est présente dans la formulation nutritionnelle en liquide pour la nutrition clinique en une quantité de 10-60 %, 20-50%, 30-40% ou 45-55% en poids par rapport au poids totale de protéine. De préférence, le reste des protéines est apporté par l'isolat de protéines de pois selon l'invention.

Dans un autre exemple de ce mode de réalisation particulier, la protéine à base de lait est présente dans la formulation nutritionnelle en liquide pour le sport en une quantité d'au moins 10, 15, 20, 25, 30, 40, 50, 60 ou 75 % en poids par rapport au poids totale de protéine, de préférence d'environ de 75 % en poids. Par exemple, la protéine à base de lait est présente dans la formulation nutritionnelle en liquide pour le sport en une quantité de 10-60 %, 20-50%, 30-40% ou 45-55% en poids par rapport au poids totale de protéine. De préférence, le reste des protéines est apporté par l'isolat de protéines de pois selon l'invention.

*Nature des autres ingrédients*

Les formulations en poudre nutritionnelles peuvent comprendre au moins une matière grasse, une protéine ou un hydrate de carbone, dans lesquelles au moins une partie de la protéine est un isolat de protéines de pois.

Les formulations liquides nutritionnelles peuvent comprendre au moins une protéine, hydrate de carbone et, matière grasse dans lesquelles au moins une partie de la protéine est un isolat de protéines de pois.

En général, une source de matières grasses, de glucides et de protéines, en plus de l'isolat de protéines de pois peut être utilisée ici, à condition que ces macronutriments soient également compatibles avec les éléments essentiels des formulations nutritionnelles selon l'invention.

Bien que les concentrations totales ou les quantités de matière grasse, de protéines et d'hydrates de carbone peuvent varier selon les besoins nutritionnels de l'utilisateur, ces concentrations ou quantités tombent le plus souvent dans l'une des gammes suivantes, y compris de toute autre matière grasse essentielle, protéines, hydrates de carbone et ou des ingrédients tels que décrits ici :
pour les produits laitiers (sous forme de yaourts, boissons laitières, crèmes laitières, desserts glacés ou sorbets):

o les concentrations en matières grasses sont d'environ 0% à environ 15 %, préférentiellement d'environ 1,5 % à environ 10 %, plus préférentiellement encore d'environ 3 % à environ 6 %, en poids de la formulation nutritionnelle en liquide ;
o les concentrations en protéines sont d'environ 1 % à environ 25 %, préférentiellement d'environ 2 % à environ 20 %, plus préférentiellement encore d'environ 2,5 % à environ 15 %, en poids de la formulation nutritionnelle en liquide ;
o les concentrations en glucides sont d'environ 5 % à environ 45 %, préférentiellement d'environ 9 % à environ 25 %, plus préférentiellement encore d'environ 13 % à environ 20 %, en poids de la formulation nutritionnelle en liquide.

Des exemples non limitatifs de matières grasses (en poudre ou liquide) ou des sources convenables de celles-ci pour une utilisation dans les formulations alimentaires en poudre et liquides décrits ici comprennent l'huile de noix de coco, l'huile de noix de coco fractionnée, l'huile de soja, l'huile de maïs, l'huile d'olive, l'huile de carthame, l'huile de carthame riche en acide oléique, huile de tournesol, huile de tournesol riche en acide oléique, les huiles de palme et de palmiste, l'oléine de palme, huile de canola, huiles marines, huiles de coton, matières grasses d'origine laitière, et leurs combinaisons.

Des exemples non limitatifs d'hydrates de carbone ou des sources convenables de ceux-ci pour une utilisation dans les formulations alimentaires en poudre et liquides décrits ici peuvent comprendre les maltodextrines, les dextrines, l'amidon hydrolysé ou modifié ou l'amidon de maïs, les polymères de glucose, le sirop de maïs, les hydrates de carbone dérivés du riz, le glucose, le fructose, le lactose, le sirop à haute teneur en fructose, le miel, les alcools de sucre (par exemple, le maltitol, l'érythritol, le sorbitol), et des combinaisons de ceux-ci.

Des exemples non limitatifs de protéines, en plus des isolats de protéines de pois, pour une utilisation dans les formulations alimentaires en poudre et liquides comprennent des protéines hydrolysée, partiellement hydrolysées ou les protéines ou les sources de protéines non hydrolysées, qui peuvent être dérivées de toute source connue, tel que du lait (par exemple, la caséine, le lactosérum), des animaux (par exemple, viande, poisson), des céréales (par exemple, le riz, le maïs), des oléagineux (soja, colza), des légumineuses à grains (lentilles, pois chiches, haricots) ou des combinaisons de ceux-ci.

Des exemples non limitatifs de telles protéines comprennent des isolats de protéines de lait, des concentrés protéiques de lait, tels que les concentrés de protéines de lactosérum, caséine, isolats de protéines de lactosérum, les caséinates, le lait de vache entier, lait écrémé, protéine de soja isolats de protéine partiellement ou totalement hydrolysées, protéines de soja concentrées, et ainsi de suite.

*Nature des ingrédients facultatifs*

Les formulations nutritionnelles selon l'invention peuvent comprendre en outre d'autres ingrédients qui peuvent modifier les caractéristiques chimiques, physiques, hédoniques ou de transformation des produits ou servir de composants nutritionnels pharmaceutiques ou complémentaires lorsqu'elles sont utilisées pour certaine population ciblée.

Beaucoup de ces ingrédients facultatifs sont connus ou autrement adaptés pour une utilisation dans d'autres produits alimentaires et peuvent également être utilisés dans les formulations nutritionnelles conformes à l'invention, à condition que ces ingrédients facultatifs soient sûrs et efficaces pour l'administration orale et sont compatibles avec les ingrédients essentiels autres du produit sélectionné.

Des exemples non limitatifs de tels ingrédients facultatifs comprennent des conservateurs, des antioxydants, des agents émulsifiants, des agents tampons, des agents actifs pharmaceutiques, des nutriments supplémentaires, des colorants, des arômes, des agents épaississants et des stabilisants, etc.

Les formulations nutritionnelles en poudre ou liquide peuvent comprendre en outre des vitamines ou des nutriments liés, tels que la vitamine A, la vitamine E, la vitamine K, la thiamine, la riboflavine, la pyridoxine, la vitamine B12, les caroténoïdes, la niacine, l'acide folique, l'acide pantothénique, la biotine, la vitamine C, la choline, l'inositol, leurs sels et leurs dérivés, et des combinaisons de ceux-ci.

Les formulations nutritionnelles en poudre ou liquide peuvent comprendre en outre des minéraux, tels que de phosphore, le magnésium, le fer, le zinc, le manganèse, le cuivre, le sodium, le potassium, le molybdène, le chrome, le sélénium, le chlorure, et des combinaisons de ceux-ci.

Les formulations nutritionnelles en poudre ou liquide peuvent également comprendre un ou plusieurs agents masquant pour réduire par exemple les saveurs amères dans les poudres reconstituées.

Des agents de masquage appropriés comprennent des édulcorants naturels et artificiels, des sources de sodium, telles que le chlorure de sodium, et des hydrocolloïdes tels que la gomme de guar, la gomme xanthane, la carraghénane, et des combinaisons de ceux-ci.

La quantité d'agent de masquage dans la formulation nutritionnelle en poudre peut varier en fonction de l'agent de masquage particulier sélectionné, les autres ingrédients de la formulation et d'autres variables de formulation ou de produits cibles.

Par « environ » est entendu la valeur plus ou moins 10 %, de préférence plus ou moins 5%.

## DESCRIPTION DES FIGURES

**Figure 1** : Analyse de digestibilité par le suivi des viscosités selon le dispositif SIMPHYD de NIZO

**Figure 2** : Profil de solubilité des isolats de protéines de pois en fonction du pH

**Figure 3** : Suivi de la viscosité au cours de la digestion in vitro des isolats de protéines de pois selon l'invention

**Figure 4** : Analyse sensorielle des crèmes dessert pour nutrition clinique.

**Figure 5** : Distribution des tailles des globules gras de l'émulsion préparée avec 100 % de protéines de lait pour une préparation pour desserts glacés

**Figure 6** : Distribution des tailles des globules gras de l'émulsion préparée avec 50 % de protéines de lait et 50 % de la protéine de pois NUTRALYS® S85F pour une préparation pour desserts glacés

**Figure 7** : Distribution des tailles des globules gras de l'émulsion préparée avec 50 % de protéines de lait et 50 % d'isolat de protéines de pois selon l'invention n°1 pour une préparation pour desserts glacés

**Figure 8** : Distribution des tailles des globules gras de l'émulsion préparée avec 50 % de protéines de lait et 50 % d'isolat de protéines de pois selon l'invention n°2 pour une préparation pour desserts glacés

**Figure 9** : profil de fonte de crèmes glacées végétaliennes préparées avec les isolats de protéines de pois selon l'invention

**Figure 10 :** Analyse sensorielle des desserts glacés

**Figure 11** : solubilité des isolats de protéines de pois en fonction du pH en comparaison avec les caséinates de sodium

**Figure 12** : Analyse sensorielle des yaourts brassés - Aspects Goût

**Figure 13** : Analyse sensorielle des yaourts brassés - Aspects Texture

**Figure 14 :** Analyse sensorielle des crèmes desserts à la vanille.

L'invention sera mieux comprise à l'aide des exemples qui suivent, lesquels se veulent illustratifs et non limitatifs.

## EXEMPLES

### Matériels et méthodes

#### *Mesure du DH (Degré d'Hydrolyse)*

Cette mesure est basée sur la méthode de détermination de l'azote aminé sur des protéines et isolats de protéines selon l'invention par le kit MEGAZYME (référence K-PANOPA) et le calcul du degré d'hydrolyse.

*Principe :*

Les groupes « azote aminé » des acides aminés libres de l'échantillon réagissent avec le N-acétyl-L-cystéine et l'OPhthaldialdéhyde (OPA) pour former des dérivés d'isoindole.
La quantité de dérivé d'isoindole formée au cours de cette réaction est stœchiométrique avec la quantité d'azote aminé libre. C'est le dérivé d'isoindole qui est mesuré par l'augmentation de l'absorbance à 340 nm.

*Mode opératoire :*

Dans un bécher de 100 ml, introduire une prise d'essai P*, exactement pesée, de l'échantillon à analyser. (Cette prise d'essai sera de 0,5 à 5,0 g en fonction de la teneur en azote aminé de l'échantillon.)
Ajouter environ 50 ml d'eau distillée, homogénéiser et transvaser dans une fiole jaugée de 100 ml, ajouter 5ml de SDS à 20% et amener au volume avec de l'eau distillée ; agiter pendant 15 minutes sur l'agitateur magnétique à 1000 rpm.
Dissoudre 1 comprimé du flacon 1 du kit Megazyme dans 3 ml d'eau distillée et agiter jusqu'à dissolution complète. Prévoir un comprimé par essai.
Cette solution n°1 est à préparer extemporanément.
La réaction se fait directement dans les cuves de spectrophotomètre.

o Blanc :
Introduire 3,00 ml de la solution n°1 et 50 µl d'eau distillée.
o Standard :
Introduire 3,00 ml de la solution n°1 et 50 µl du flacon 3 du kit Megazyme.
o Echantillon :
Introduire 3,00 ml de la solution n°1 et 50 µl de la préparation de l'échantillon.

Mélanger les cuves et lire les mesures d'absorbance (A1) des solutions après 2 mn environ au spectrophotomètre à 340 nm (spectrophotomètre équipé de cuves de 1,0 cm de trajet optique, pouvant mesurer à une longueur d'onde de 340 nm, et vérifié selon le mode opératoire décrit dans le manuel technique du constructeur qui s'y rapporte).
Amorcer ensuite les réactions immédiatement en ajoutant 100 µl de la solution OPA flacon 2 du kit Megazyme dans les cuves de spectrophotomètre.
Mélanger les cuves et les placer environ 20 minutes dans l'obscurité.
Faire ensuite la lecture des mesures d'absorbance du blanc, du standard et des échantillons au spectrophotomètre à 340 nm.

*Mode de calcul :*

La teneur en azote aminé libre, exprimée en pourcentage en masse de produit tel quel, est donnée par la formule suivante :

$$[\,NH_2\ \%brut\,] = \frac{(\Delta A_{ech} - \Delta A_{blc}) \times 3{,}15 \times 14{,}01 \times V \times 100}{6803 \times 0{,}05 \times 1000 \times m}$$

$$= \frac{(\Delta A_{ech} - \Delta A_{blc}) \times 12{,}974 \times V}{m \times 1000}$$

Où : $\Delta A = A2 - A1$

V = Volume de la fiole
m = masse de la prise d'essai en g
6803 = coefficient d'extinction du dérivé d'isoindole à 340 nm (en $L.mol^{-1}.cm^{-1}$).
14,01 = masse molaire de l'Azote (en $g.mol^{-1}$)
3,15 = volume final dans la cuve (en ml)
0,05 = prise d'essai dans la cuve (en ml)

Le degré d'hydrolyse (DH) est donné par la formule :

$$DH = \frac{\text{Azote aminé (\%)} \times 100}{\text{Azote protéique (\%)}}$$

où l'azote protéique est déterminé selon la méthode de DUMAS selon la norme ISO 16634.

*Mesure de la solubilité dans l'eau à différents pH*

Cette mesure est basée sur la dilution de l'échantillon dans de l'eau distillée, sa centrifugation et l'analyse du surnageant.

*Mode opératoire :*

Dans un bécher de 400 ml, introduire 150 g d'eau distillée à une température de 20°C +/- 2°C, mélanger avec un barreau magnétique et ajouter précisément 5 g de l'échantillon à tester.
Ajuster ou non le pH à la valeur souhaitée avec NaOH 0,1 N.
Compléter le contenu en eau à 200 g.
Mélanger pendant 30 minutes à 1000 rpm et centrifuger pendant 15 minutes à 3000 g.
Collecter 25 g du surnageant.
Introduire dans un cristallisoir préalablement séché et taré.
Placer dans une étuve à 103°C +/- 2°C pendant 1 heure.
Placer ensuite dans un dessiccateur (avec agent déshydratant) pour refroidir à température ambiante et peser.
Le contenu en matières sèches solubles, exprimé en % en poids, est donné par la formule suivante :

$$\frac{(m1 - m2) \times (200 + P) \times 100}{P1 \times P} = \text{\% de solubilité}$$

Où :

- o P = poids, en g, de l'échantillon = 5 g
- o m1 = poids, en g, du cristallisoir après séchage
- o m2 = poids, en g, du cristallisoir vide
- o P1 = poids, en g, de l'échantillon collecté = 25 g

***Mesure de la digestibilité in vitro***

Le dispositif SIMPHYD de NIZO est un modèle statique de simulation des processus de digestion le long du tractus gastrointestinal.
La digestion gastrique est combinée avec une mesure de viscosité en ligne au cours du temps. Adaptée aux conditions physiologiques, l'acidification gastrique est initiée avec de l'HCl concentrée et les enzymes de digestion enzymatique (pepsine et lipase) sont ajoutées.
Tous les échantillons sont soumis au dispositif SIMPHYD à la concentration de 3 % (m/v).
Les mesures sont réalisées comme suit :

- o On détermine une ligne de base de viscosité pendant 5 minutes, à pH naturel et à 37°C
- o On acidifie ensuite à pH 2 avec de l'HCl et maintient à 37°C pendant 15 minutes,
- o On ajoute pepsine et lipase à 20 minutes.

La viscosité est suivie pendant 3 heures, à l'aide d'un rhéomètre TA Instruments AR-2000 sous vitesse de cisaillement de 75 $s^{-1}$.
Les mesures sont réalisées en double. Si l'écart entre deux mesures est trop important, une troisième mesure est réalisée.
Le profil des protéines testées est comparé avec ceux établis par Hall et al (article de 2003 intitulé Casein and whey exert different effects on plasma amino acid profiles, gastrointestinal hormone secretion ans appetite publié dans Br. J. Nutr. 89 : 239-248) pour des protéines dites « rapides » et « lentes » (respectivement protéines de lactosérum et caséinates de sodium).

Les profils des viscosités obtenues sont présentés dans la **Figure 1.**

La viscosité apparente de l'échantillon de protéines de lactosérum témoin ne change pas durant le processus gastrique, tandis que la viscosité apparente du témoin caséinates de Na augmente après l'acidification gastrique et reste élevée après l'ajout des enzymes digestives.

Après 5 minutes d'acidification, les protéines de pois (NUTRALYS® S85M) affichent un premier pic de viscosité, suivi d'un second à 15 minutes, puis le profil de viscosité rejoint celui des protéines de lactosérum, à des valeurs légèrement supérieures.

La viscosité commence à chuter avant l'ajout des enzymes digestives.

Les isolats de protéines de pois selon l'invention montrent une très petite augmentation en viscosité apparente, qui diminue à nouveau à des valeurs légèrement au-dessus de celles des protéines de lactosérum, pendant 30 minutes.

Le comportement des isolats de protéines de pois selon l'invention traduit leur caractère « rapide » caractéristique de protéines plus satiétogènes que les protéines dites « lentes ». Ce qui induit un vidage gastrique plus rapide et une augmentation post-absorptive des aminoacides plasmiques.

***Mesure du pouvoir émulsifiant***

Comme indiqué ci-avant, les mesures sont effectuées par diffusion de la lumière de poudre de protéines remise en solution, les émulsions obtenues étant analysées au granulomètre pour la taille des globules gras formés.

Les résultats sont exprimés par :

- o Le Dmode, diamètre de la population principale,
- o Le D(4,3), diamètre moyen arithmétique
- o Les D10, D50 et D90, diamètres pour lesquels il y a 10 %, 50 % et 90 % de passants.

Le tableau ci-après regroupe la taille des globules gras des émulsions réalisés à partir :

- o Des deux isolats de protéines de pois conformes à l'invention n°1 et n°2,
- o De différentes protéines de lait
- o D'un lot de caséinates de sodium.

Le ΔD correspond à la différence entre le D90et le D10 ; il traduit l'état de dispersion des émulsions.

Plus cette valeur est petite, plus les tailles des gouttelettes sont proches, et plus l'émulsion est homogène.

| | Capacité émulsifiante : taille d'émulsion (Dmode en μm) | | | | | Stabilité de l'émulsion (ΔD) |
|---|---|---|---|---|---|---|
| | Dmode | D(4,3) | D10 | D50 | D90 | |
| isolat de protéines de pois selon l'invention n°1 | 23,4 | 20,5 | 2,1 | 19,4 | 38,4 | 36,3 |
| isolat de protéines de pois selon l'invention n°2 | 23,6 | 21,4 | 3,4 | 20,1 | 39,1 | 35,7 |
| Lait écrémé | 24,9 | 20,9 | 5,9 | 20,1 | 36,2 | 30,3 |
| Protéine de lait MPC de FONTERRA | 32,8 | 28,1 | 8,7 | 27,8 | 46,3 | 37,6 |
| Protéines de lait MPC 80 Domo DMV | 25,5 | 21,8 | 6,5 | 21,1 | 37,3 | 30,8 |
| Protéine de lait MPI Prodiet 87B de INGREDIA | 25,4 | 22,6 | 6,9 | 21,4 | 39,1 | 32,2 |
| Caséinates de sodium de DMV | 31,9 | 25,3 | 6,3 | 25,3 | 43,6 | 37,3 |

Les isolats de protéines de pois selon l'invention présentent :

o de bonnes propriétés émulsifiantes (Dmode plus faible : 23,4 et 23,6 μm, respectivement)
o Une stabilité d'émulsion (ΔD) du même ordre voire plus faible que certaines protéines de lait concentrées ou que les caséinates de sodium et
o une homogénéité d'émulsion équivalente aux protéines de lait.

Leurs propriétés les rendent par ailleurs tout à fait transposable aux applications où un certains pouvoir émulsifiant est recherché comme les préparations de desserts glacés, non dairy coffee whitener, pour lesquelles les caséinates sont recherchés.

**Exemple 1 : préparation des isolats de protéines de pois selon l'invention et caractérisation des isolats de protéines de pois référencés « 1 » et « 2 » selon l'invention**

*Procédé de préparation des isolats de protéines de pois selon l'invention n° 1*

On délaye 1500 kg de protéine de pois (commercialisée par la société demanderesse sous le nom de marque NUTRALYS® S85F) dans 8500 litres d'eau préchauffée à 55°C.
On agite durant 3 h à 55°C.
On ajoute 0,5 % (poids/poids) de d'endoprotéase FLAVORPRO 750 MDP (de la société BIOCATALYST).
On agite durant 1 h à 55°C.
Le degré hydrolyse obtenu est alors de 7.
On inhibe la réaction par chauffage du milieu à 70°C et on maintient à cette température pendant 10 minutes minimum.
On applique un traitement UHT (barème 140°C - 10 s).
On sèche par atomisation à une matière sèche d'environ 93%.
*Procédé de préparation des isolats de protéines de pois selon l'invention n°2*
On délayage 1500 kg de protéine de pois (commercialisée par la société demanderesse sous le nom de marque NUTRALYS® S85F) dans 8500 litres d'eau préchauffée à 55°C.
On agite durant 3 h à 55°C.
On ajoute 0,3 % (poids/poids) d'endoprotéase ENZECO FUNGAL PROTEASE (de la société EDC).
On agite durant 1h à 55°C, le degré hydrolyse obtenu est alors de 6,5.
On inhibe la réaction enzymatique par chauffage du milieu à 70°C et maintient durant 10 minutes minimum.
On applique un traitement UHT (barème 140°C - 10 s).
On sèche par atomisation ensuite à une matière sèche d'environ 93%.

*Caractéristiques des isolats de protéines de pois ainsi préparés*

*1. Teneur en acides aminés libres*

Mesures effectuées selon la norme NF EN ISO13903:2005

| | Acides aminés libres / somme des acides aminés (g/100 g brut en %) |
|---|---|
| NUTRALYS ® S85F | 0,18 |
| isolat de protéines de pois selon l'invention n°1 | 0,77 |
| isolat de protéines de pois selon l'invention n°2 | 1,85 |

*2. Profil de viscosité*

Pour la détermination du profil de viscosité dans l'eau, les mesures sont effectuées

o sur une solution aqueuse d'isolats de protéines de pois à 15 % de matière sèche (eau osmosée et azidurée à 200 ppm pour prévenir tout risque bactériologique),
o en rhéomètre AR2000 de la société TA Instruments,
o présentant une géométrie à cylindres concentriques,
o avec un taux de cisaillement de 0,6 $10^{-3}$ à 600 $s^{-1}$ en 3 minutes (log) et
o à la température de 20°C (3 min d'équilibre température avant test).

Avant mesure, la solution est agitée pendant au moins 10 heures, à 750 tr/min et à 20°C.
Le pH n'est pas ajusté.
Le tableau suivant permet de comparer les profils de viscosité des isolats de protéines de pois conformes à l'invention, en regard de ceux des protéines de lait contrôle et de la protéine de pois NUTRALYS® S85F.

| Solution à 15% de MS | Viscosité en Pa.s à 20°C, pH tel quel | | | | | | |
|---|---|---|---|---|---|---|---|
| référence échantillon | 5 $s^{-1}$ | 10 $s^{-1}$ | 20 $s^{-1}$ | 40$s^{-1}$ | **100$s^{-1}$** | **200$s^{-1}$** | **600 $s^{-1}$** |
| Protéine de pois NUTRALYS® S85F | 15,820 | 9,538 | 5,700 | 3,570 | 1,900 | 1,251 | 0,680 |
| Protéine de lait MPC 4882 de FONTERRA | 0,030 | 0,032 | 0,030 | 0,029 | 0,029 | 0,028 | 0,026 |
| Protéine de lait Prodiet 27B fluide de INGREDIA | 0,022 | 0,021 | 0,019 | 0,017 | 0,015 | 0,014 | 0,013 |
| Isolat de protéines de pois selon l'invention n°1 | 0,013 | 0,013 | 0,0135 | 0,011 | 0,010 | 0,010 | 0,010 |
| Isolat de protéines de pois selon l'invention n°2 | 0,015 | 0,016 | 0,016 | 0,014 | 0,013 | 0,014 | 0,014 |

On constate que les isolats de protéines de pois conformes à l'invention présentent un comportement Newtonien comme celui des protéines de lait alors que la protéine de pois NUTRALYS® S85F a un comportement rhéofluidifiant très marqué.
De plus, les viscosités des isolats de protéines de pois n°1 et 2 sont très proches des viscosités des protéines de lait, voire mêmes plus basses.

*3. Profil de solubilité dans l'eau en fonction du pH*

Les résultats sont présentés dans le tableau suivant et sont illustrés par la **Figure 2.**

| | Protéine de pois NUTRALYS® S85F | Isolat de protéines de pois selon l'invention n°1 | Isolat de protéines de pois selon l'invention n°2 |
|---|---|---|---|
| Solubilité en % | Moyenne sur 7 échantillons | | |
| pH 3 | 47 | 50 | 49 |
| pH 4 | 13 | 39 | 34 |
| pH 5 | 11 | 38 | 33 |
| pH 6 | 20 | 49 | 51 |
| pH 7 | 38 | 53 | 64 |
| pH 8 | 49 | 55 | 70 |

*4. Etude de stabilité*

Une étude de stabilité dans le temps des isolats de protéines de pois conformes à l'invention est menée afin de mesurer leur comportement en regard des protéines de pois intactes.
L'étude est menée après stockage 6 mois selon un barème température / humidité relative de :

o 40°C +/- 2°C

o à 75 % +/- 5 % d'humidité relative.

Les mesures sont exprimées en % de perte de solubilité (mesurée selon le mode opératoire ci-avant).

| | Isolat de protéines de pois selon l'invention n°1 | Isolat de protéines de pois selon l'invention n°2 | Protéine de pois NUTRALYS® S85F |
|---|---|---|---|
| Solubilité en % | Après 6 mois de stockage | | |
| pH 3 | -12,2 | -27,7 | -44,0 |
| pH 4 | -10,8 | -14,8 | -18,4 |
| pH 5 | -6,9 | -9,8 | - 5,2 |
| pH 6 | -8,5 | -14,7 | -19,6 |
| pH 7 | -8,8 | -19,9 | -47,4 |
| pH 8 | -5,9 | -22,0 | -57,9 |

On constate ainsi qu'à pH7, le NUTRALYS® S85F perd environ la moitié de sa solubilité alors que les isolats de protéines de pois ne perdent qu'au maximum 1/5 de leur solubilité, et conservent dans tous les cas une solubilité supérieure à celle du NUTRALYS® S85F initial.

*4-Profil de digestibilité*

Le but de cette étude est d'évaluer la digestibilité protéique totale des isolats de protéines de pois selon l'invention n°1 et 2 et de la comparer au NUTRALYS® S85F.

Pour cette étude, 48 rats Sprague Dawley (Charles River, Lyon, France) de 100 - 125 grammes au début de l'étude ont été randomisés en fonction de leur poids dans 4 groupes de 12 rats.

Cette expérience a été conduite en accord avec la législation européenne d'expérimentation animale et dans le respect du bien-être animal (projet APAFIS n° 0000501).

A leur arrivée, les rats ont subi une période de quarantaine de 7 jours pendant laquelle ils ont reçu un aliment standard pour rats en croissance.

A partir du premier jour d'étude, les rats ont reçu les régimes suivants et ce, pour 10 jours :

| | Contrôle | Protéine de pois NUTRALYS® S85F | Isolat de protéines de pois selon l'invention n °1 | Isolat de protéines de pois selon l'invention n °2 |
|---|---|---|---|---|
| | en % | en % | en % | en % |
| Produit à tester | 0 | 12,5 | 12,4 | 12,5 |
| Cellulose microcristalline de MB Biomedicals | 5 | 5 | 5 | 5 |
| Amidon de maïs | 72,7 | 60,2 | 60,2 | 60,2 |
| qsp 100 % en amidon de maïs | 12,9 | 0,39 | 0,44 | 0,4 |
| Huile de soja - Huileries de Sérignan | 7,5 | 7,5 | 7,5 | 7,5 |
| Saccharose | 10 | 10 | 10 | 10 |
| Maltodextrine GLUCIDEX® IT21 de ROQUETTE FRERES | 0 | 0 | 0 | 0 |
| Choline bitartrate | 0,25 | 0,25 | 0,25 | 0,25 |
| t-butyl-hydroquinone | 0,0018 | 0,0018 | 0,0018 | 0,0018 |
| Mélange de minéraux AIN-93G de MP Biomedicals | 3,5 | 3,5 | 3,5 | 3,5 |

(suite)

| | Contrôle | Protéine de pois NUTRALYS® S85F | Isolat de protéines de pois selon l'invention n °1 | Isolat de protéines de pois selon l'invention n °2 |
|---|---|---|---|---|
| | en % | en % | en % | en % |
| Mélange de vitamines AIN-93-VX de MP Biomedicals | 1 | 1 | 1 | 1 |

Les quantités étant indiquées en pourcentage en poids.

Les consommations d'aliment, de boisson et l'évolution pondérale sont suivis les premier et cinquième jours d'étude puis de façon quotidienne jusqu'au dixième et dernier jour d'étude.

Lors des 5 derniers jours d'étude, urines et fèces sont aussi collectés de façon quotidienne. Les taux protéiques des aliments et fèces sont déterminés par la méthode Kjeldahl (norme ISO 1871:2009).

Les analyses de l'azote des fèces et aliments permettra de calculer le Coefficient d'Utilisation Digestive (CUD) :

$$\text{CUD (\%)} = \frac{[\mathit{quantit\acute{e}.absorb\acute{e}e} - \mathit{quantit\acute{e}.excr\acute{e}t\acute{e}e.dans.les.f\grave{e}ces}]}{\mathit{quantit\acute{e}.absorb\acute{e}e}}$$

Tous les rats ont eu la croissance attendue. Elle était significativement plus faible dans le groupe contrôle déficient en protéine, comme toujours dans ce schéma expérimental.

La consommation de boisson n'a pas été modifiée par les différents régimes.

Les modifications des autres paramètres urinaires et fécaux sont directement liées au régime contrôle ou expérimental.

En fonction des différents jours expérimentaux, on a pu calculer les digestibilités suivantes :

| **Régime** | Digestibilité (%) CUD | J6 | J7 | J8 | J9 | J10 | Moyenne |
|---|---|---|---|---|---|---|---|
| Protéine de pois NUTRALYS® S85F | n | 12 | 12 | 12 | 12 | 12 | 12,00 |
| | moyenne | **96,5** | **96,3** | **95,3** | **95,0** | **95,8** | **95,8** |
| | écartype | 2,6 | 1,4 | 1,4 | 1,7 | 1,9 | 0,8 |
| Isolat de protéines de pois selon l'invention n°1 | n | 12 | 12 | 12 | 12 | 12 | 12,00 |
| | moyenne | **94,6** | **94,7** | **93,8** | **92,1** | **93,8** | **93,8** |
| | écartype | 4,6 | 2,1 | 1,8 | 3,6 | 3,5 | 1,3 |
| Isolat de protéines de pois selon l'invention n°2 | n | 12 | 12 | 12 | 12 | 12 | 12,00 |
| | moyenne | **95,2** | **95,7** | **95,2** | **93,2** | **94,6** | **94,8** |
| | écartype | 2,9 | 1,9 | 2,1 | 2,8 | 1,8 | 1,0 |

D'un point de vue statistique, la digestibilité protéique du NUTRALYS® S85F est significativement différente de celle de l'isolat de protéines de pois selon l'invention n°1 ($p = 0.0003$).

Néanmoins, d'un point de vue biologique, ces différences ne sont absolument pas significatives.

On peut donc conclure à des digestibilités similaires entre le NUTRALYS et les isolats de protéines de pois selon l'invention n°1 et n°2 avec les arrondis suivants :

| **Régime** | | Global (arrondi) |
|---|---|---|
| Protéine de pois NUTRALYS® S85F | moyenne | **96** |
| | écartype | 1 |
| Isolat de protéines de pois selon l'invention n°1 | moyenne | **94** |
| | écartype | 1 |

(suite)

| Régime | | Global (arrondi) |
|---|---|---|
| Isolat de protéines de pois selon l'invention n°2 | moyenne<br>écartype | **95**<br>1 |

*5- Cinétique de digestion.*

Cet essai utilise une technique *in vitro* de simulation de digestion protéique selon la méthode suivante.

L'utilisation de méthodes de digestion *in vitro* permet un criblage efficace de différents produits alimentaires riches en protéines en fonction de leurs propriétés physico-chimiques et de leur comportement au cours de leur passage dans l'estomac et l'intestin grêle.

Ici, nous comparons des solutions à 3% (m/m) de protéine pour le NUTRALYS® S85F, les isolats de protéines de pois selon l'invention n°1 et n°2 et les contrôles communément utilisés dans ce genre de tests que sont la caséine et le lactosérum.

Ces 5 solutions sont donc testées dans un modèle *in vitro* de digestion dynamique dans des conditions physiologiques équivalentes à l'estomac puis l'intestin grêle.

Ce modèle de digestion est couplé à un suivi en temps réel de la viscosité grâce à un rhéomètre à contrainte imposée (AR-2000, TA Instruments, New Castle, DE, USA) équipé d'un rotor à ailette en acier inoxydable (hauteur 39 mm et diamètre 28 mm).

Les solutions protéiques ont été testées dans les mêmes conditions, à savoir un cisaillement régulier à 37°C et à la vitesse de 150 $s^{-1}$ pendant 3h.

La viscosité de base a été monitorée pendant 5 minutes avant de procéder à une acidification progressive de la solution jusqu'à un pH contenu entre 1,5 et 2.

Cette acidification prend en général 15 minutes.

Une fois le pH de la solution stabilisé entre 1,5 et 2, on ajoute un cocktail enzymatique de pepsine stomacale (Sigma-Aldrich, St. Louis, MO, USA) et de lipase (Novozyme, Gladesaxe, Danemark). Les courbes de suivis de viscosité sont présentées dans la **Figure 3.**

Le suivi de la viscosité au cours de la digestion *in vitro* traduit bien la cinétique de digestion des protéines. Ainsi la digestion du lactosérum ne donne pas lieu à une modification de la viscosité car il s'agit d'une protéine rapidement digérée. La caséine quant à elle montre une viscosité très augmentée après l'acidification, ce qui traduit une digestion lente.

La protéine de pois de type NUTRALYS® démontre un comportement intermédiaire entre ces 2 standards, il est qualifié « d'intermédiaire rapide ».

Cependant, les isolats de protéines de pois selon l'invention n°1 et n°2 montrent un comportement encore intermédiaire entre le NUTRALYS® S85F et le lactosérum.

Il est à noter que l'association de protéines rapides avec des protéines intermédiaires peut faciliter la digestion et allonger le temps de diffusion des acides aminés dans la circulation sanguine, ce qui présente un intérêt pour la synthèse protéique au sein des muscles après un effort long.

**Exemple 2** : **Remplacement des protéines de laits par des isolats de protéines de pois dans des crèmes desserts traitées UHT pour la nutrition clinique.**

Les formulations nutritives à base de protéines de lait, de pois, de pois concurrent et d'isolats de protéines de pois selon l'invention sont présentées dans le tableau suivant (substitution de l'ordre de 23 %) :

| Ingrédients | Formulation contrôle | Formulation nutritionnelle selon l'invention n °2 | Formulation nutritionnelle avec protéines de pois | Formulation nutritionnelle avec protéines de pois concurrente |
|---|---|---|---|---|
| Eau déminéralisée | 64,30 | 64,30 | 64,30 | 64,30 |
| Saccharose | 12,40 | 12,40 | 12,40 | 12,40 |
| Isolat de protéines de lait (MPI - Ingredia) | 12,00 | 9,60 | 9,60 | 9,60 |
| Huile de colza | 3,94 | 3,94 | 3,94 | 3,94 |

(suite)

| Ingrédients | Formulation contrôle | Formulation nutritionnelle selon l'invention n °2 | Formulation nutritionnelle avec protéines de pois | Formulation nutritionnelle avec protéines de pois concurrente |
|---|---|---|---|---|
| Amidon modifié de maïs CLEARAM® CR3020 (ROQUETTE FRERES) | 3,50 | 3,50 | 3,50 | 3,50 |
| Maltodextrine GLUCIDEX® IT19 (ROQUETTE FRERES) | 1,70 | 1,70 | 1,70 | 1,70 |
| DEXTRINE de maïs NUTRIOSE® FM06 | 1,50 | 1,50 | 1,50 | 1,50 |
| Arôme lait | 0,36 | 0,36 | 0,36 | 0,36 |
| Lécithine de soja | 0,30 | 0,30 | 0,30 | 0,30 |
| Isolat de protéines de pois n°2 (selon l'invention - cf. exemple 1 ci-dessus) | | 2,40 | | |
| Protéines de pois NUTRALYS® S85F (ROQUETTE FRERES) | | | 2,40 | |
| Protéines de pois PISANE® (COSUCRA) | | | | 2,40 |
| Total | 100 | 100 | 100 | 100 |

Les quantités étant indiquées en pourcentage en poids.

Les valeurs nutritionnelles pour 100 g sont les suivantes :

| | Formulation contrôle | Formulation nutritionnelle selon l'invention n °2 | Formulation nutritionnelle avec protéines de pois | Formulation nutritionnelle avec protéines de pois concurrente |
|---|---|---|---|---|
| Energie calorique (kCal) | 151 | 153 | 153 | 153 |
| Teneur en protéines (g) | 10,3 | 10,1 | 10,1 | 10,1 |
| Dont protéines de lait | 10,3 | 8,1 | 8,1 | 8,1 |
| Dont isolats protéines de pois | 0 | 0 2 | 0 | 0 |
| Dont protéines de pois | 0 | | 2 | 2 |
| Matières grasses (g) | 4,7 | 4,9 | 4,9 | 4,9 |
| Hydrates de carbone (g) | 17,8 | 17,7 | 17,7 | 17,7 |
| Dont saccharose | 12,9 | 12,8 | 12,8 | 12,8 |
| Fibres (g) | 1,2 | 1,3 | 1,3 | 1,3 |
| Dont solubles | 1,2 | 1,3 | 1,3 | 1,3 |
| Dont insolubles | 0 | 0 | 0 | 0 |

Le procédé de fabrication des crèmes desserts est le suivant :

◦ Préchauffer l'eau à 50°C,
o Mélanger à sec toutes les poudres (protéines de lait, protéines de pois, isolats de protéines de pois, maltodextrines, dextrines, le saccharose et l'amidon),
o Ajouter le mélange de poudre dans l'eau à 50°C, disperser avec un fouet pendant 1 min puis mélanger avec un mélangeur SILVERSON à 3000 trs/min pendant 30 minutes à 50°C,

o Ajouter l'arôme à ladite solution,
o Placer la lécithine et l'huile dans un récipient de mélange à part, agiter et chauffer à 50°C,
o Après 30 min d'hydratation, ajouter la lécithine et le mélange d'huile au lot principal en utilisant un cisaillement de 10 000 trs/min pendant 5 minutes,
o Stériliser le produit à 133°C pendant 55 sec dans un échangeur tubulaire puis conditionner à 70°C,
o Stocker à 4°C.

*Comparaison des propriétés sensorielles de crèmes desserts pour la nutrition clinique.*

Le panel est qualifié à la dégustation de produits formulés. Il a reçu une formation et un entrainement afin de vérifier ses performances en termes de :

- Capacité à discriminer les produits
- Consensus, utilisation correcte des descripteurs
- Répétabilité, capacité à repérer un doublon

Le panel est constitué de 26 personnes, parmi le personnel Roquette, et le jour de la dégustation, 11 personnes étaient présentes, parmi lesquelles 6, ont spécifiquement été entraînées sur la thématique des crèmes desserts.
Les produits ont été préparés puis conservés au réfrigérateur.
Ils sont servis aux panélistes à température ambiante.

**Conditions de dégustation**

Au laboratoire d'analyse sensorielle : box individuels de dégustation, murs blancs, ambiance calme (pour faciliter la concentration)

- Lumière blanche (pour avoir exactement la même vision du produit)
- En fin de matinée ou d'après-midi (pour être au maximum des capacités sensorielles)
- Produits anonymés par un code à 3 chiffres (pour éviter que le code n'influence l'appréciation des produits)
- Produits présentés dans un ordre aléatoire (pour éviter les effets d'ordre et de rémanence)

**Exercice**

La méthode employée pour comparer les produits a été le Profil Flash (JM Sieffermann, 2000).
Les produits sont tous présentés simultanément. Il s'agit de comparer les produits entre eux en réalisant une succession de classements : les panélistes choisissent les descripteurs qui leur semblent les plus pertinents pour discriminer les produits entre eux et classent les produits selon ces descripteurs, il est possible que plusieurs produits soient regroupés sur un même rang.

Exemple :

Descripteur sensoriel : *Fondant*

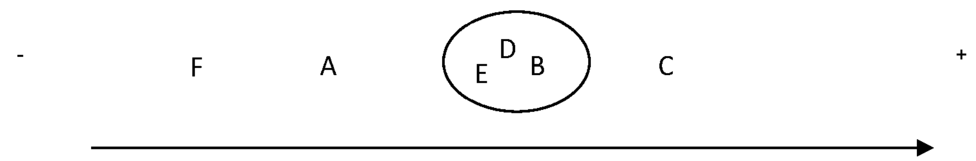


Voici la liste de descripteurs présentée aux panélistes à titre indicatif :

| CREMES DESSERTS | | | |
|---|---|---|---|
| **Descripteur** | **Définition** | **Mode opératoire** | **Référence** |
| **ASPECT** | | | |
| **Brillant** | qui renvoie la lumière. (pas brillant / très brillant) | explorez visuellement le produit | Jaune d'œuf cru |
| **Granuleux (aspect)** | qui présente des particules (nombreuses et/ou de taille importante) (pas granuleux / très granuleux) | explorez visuellement le produit | Sucre roux |
| **GOUT** | | | |
| **Sucré** | Saveur élémentaire provoquée par une solution de saccharose | Goûtez le produit | Sucre en poudre |
| **Amer** | Saveur élémentaire qui provoque une sensation âpre, désagréable, par une solution de caféine | Goûtez le produit | Caféine / café |
| **Pois** | Qui le goût de pois | Goûtez le produit | Pois |

| TEXTURE | | | |
|---|---|---|---|
| **à la cuillère** | | | |
| **Epais (cuillère)** | qui résiste à l'écoulement (pas épais / très épais) | évaluez la résistance du produit à la contrainte en tournant la cuillère dans le pot | Miel |
| **Court** | qui forme un mince filet d'écoulement / tombe par paquet (texture longue / courte) | prenez une unité de produit avec une cuillère. Levez et tournez la cuillère. Vérifiez la longueur du filet d'écoulement | SojaSun |
| **Texture en bouche** | | | |
| **Phase initiale (perçue dès l'introduction dans la bouche)** | | | |
| **Epais (en bouche)** | qui s'écoule difficilement en bouche (pas épais / très épais) | prenez une unité de produit en bouche et faites le circuler dans la cavité buccale | Mascarpone |
| **Phase masticatoire (perçue pendant la mastication)** | | | |
| **Fondant** | Evaluation de la capacité de dissolution du produit en bouche sous l'action de la salive. (pas fondant / très fondant) | gardez le produit en mouvement dans la bouche et évaluez le temps mis pour le dissoudre. | Glace |
| **Crémeux** | qui présente un contact doux et fond en bouche (pas crémeux / très crémeux) | prenez une unité de produit en bouche et vérifiez s'il provoque un contact mou et s'il tapisse la cavité buccale | Crème fraîche épaisse |
| **Granuleux (en bouche)** | qui présente des particules (lisse / très granuleux) | glissez la langue contre le palais et évaluer la perception de petits grains en bouche | Sucre roux |
| **Phase résiduelle (modifications opérées pendant la mastication)** | | | |
| **Collant** | qui adhère aux parois de la cavité buccale (pas collant / très collant) | placez un échantillon sur la langue, le comprimer contre le palais et évaluez la force nécessaire pour l'enlever avec la langue | Caramel mou |

**Traitement des données**

La méthode de traitement statistique adaptée à ce type de données est l'Analyse Factorielle Multiple (J. Pagès, 1994) sur les données-rangs des produits. Pour que les résultats soient plus clairs, l'AFM a été réalisée plusieurs fois; en global, et par critère (aspect, odeur, goût, texture). Les graphiques présentés synthétisent l'ensemble des résultats fournis par cette méthode.

Les traitements statistiques ont été effectués avec le logiciel R version 2.14.1 (2011-12-22)

**Résultats**

Comme il apparaît sur la **Figure 4**, les crèmes desserts sont discriminés de façon consensuelle par l'ensemble des panélistes, avec une dimension 1 très importante à presque 64% qui nous décrit les produits extrêmes de la façon suivante.

Le témoin lait est le plus brillant en aspect, fondant en bouche mais le moins épais, et en goût le plus sucré.

En texture, les crèmes desserts avec la PISANE® C9 et le NUTRALYS® S85F sont plus épaisses que celles avec l'isolat de protéine de pois selon l'invention.

En goût, la crème dessert avec l'isolat de protéine de pois est moins pois que l'essai avec la PISANE® C9 et le NUTRALYS® S85F.

**<u>Exemple 3. Remplacement des protéines de lait par les isolats de protéines de pois dans les crèmes alacées/ desserts glacés</u>**

4 recettes sont élaborées :

o Témoin : avec 100 % de protéines de lait

o Recette n°1 : 50 % de protéine de lait remplacés par de la protéine de pois NUTRALYS® S85F.

o Recette n°2 : 50 % de protéine de lait remplacés par de l'isolat de protéines de pois selon l'invention n°1 ;

o Recette n°3 : 50 % de protéine de lait remplacés par de l'isolat de protéines de pois selon l'invention n°2 ;

| | Témoin | Recette n°1 | Recette n°2 | Recette n°3 |
|---|---|---|---|---|
| Eau | 48,70 | 48,77 | 48,79 | 48,79 |
| Saccharose | 13,00 | 13,00 | 13,00 | 13,00 |
| Crème (35 % de matière grasse) | 27,40 | 27,40 | 27,40 | 27,40 |
| Lactose | 0,00 | 2,10 | 2,10 | 2,10 |
| Poudre de lait écrémée | 5,80 | 2,05 | 2,05 | 2,05 |
| Sirop de glucose 70/81 | 4,00 | 4,00 | 4,00 | 4,00 |
| Protéine de pois NUTRALYS ® S85F | 0,00 | 1,58 | 0,00 | 0,00 |
| Isolat de protéines de pois selon l'invention n°1 | 0,00 | 0,00 | 1,56 | 0,00 |
| Isolat de protéines de pois selon l'invention n°2 | 0,00 | 0,00 | 0,00 | 1,56 |
| Stabilisants (CREMODAN SE30) | 0,60 | 0,60 | 0,60 | 0,60 |
| Arôme vanille IFF 10836706 | 0,50 | 0,50 | 0,50 | 0,50 |
| **TOTAL** | 100,00 | **100,00** | **100,00** | **100,00** |

Les quantités étant indiquées en pourcentage en poids.

| Valeurs nutritionnelles pour 100 g | | | | |
|---|---|---|---|---|
| Energie (kcal) | 181,75 | 174,63 | 174,47 | 168,31 |
| Matière grasse (g) | 10,03 | 10,15 | 10,15 | 10,15 |
| Glucides (g) | 20,33 | 20,30 | 20,33 | 20,30 |
| Dont sucres (g) | 19,59 | 17,54 | 17,55 | 17,54 |
| Protéines (g) | 2,53 | 2,50 | 2,50 | 2,50 |
| Dont protéines de lait (q) | 2,53 | 1,25 | 1,25 | 1,25 |
| Dont protéines végétales (g) | 0,00 | 1,25 | 1,25 | 1,25 |
| Fibres (g) | 0,14 | 0,14 | 0,14 | 0,14 |

(suite)

| Valeurs nutritionnelles pour 100 g | | | | |
|---|---|---|---|---|
| Matière sèche (%) | 33,98 | 33,85 | 33,86 | 33,87 |
| Lactose (%) | 4,09 | 4,06 | 4,06 | 4,06 |
| ESDL (%) | 3,84 | 3,95 | 3,95 | 3,95 |
| Taux de substitution de la protéine de lait (%) | 0 | 50 | 50 | 50 |

Le procédé de fabrication est le suivant :

o Ajouter le lait écrémé dans le récipient (40/45°C),
o Ajouter les ingrédients en poudre dans le récipient et mélanger pendant 15 minutes à 80 Hz dans le batch cooker CHOCOTEC,
o Mélanger les stabilisants et le sucre ensemble, puis incorporer le mélange dans le récipient,
o Mélanger pendant 20 minutes à 80 Hz,
o Incorporer la crème et le sirop de glucose
o Mélanger pendant 15 minutes à 80 Hz
o Pasteuriser à 80°C pendant 3 minutes,
o Refroidir à 70°C - La moitié du mélange obtenu est homogénéisé directement ; l'autre moitié est refroidie à 50°C. Quand le premier lot est homogénéisé, le deuxième lot est réchauffé à 70°C et ensuite homogénéisé,
o Homogénéiser à 200 bar,
◦ Refroidir dans le récipient de maturation à 4°C et ajouter l'arôme
o Laisser mâturer durant 23 h
o Fouetter pour obtenir un foisonnement de 95 - 100 % et congeler à -30°C pendant 1 heure
o Conserver la crème glacée à -20°C.

**Analyses**

*Caractérisation des mélanges durant le procédé de fabrication*

| | Témoin | Recette n°1 | Recette n°2 | Recette n°3 |
|---|---|---|---|---|
| pH avant maturation | 6,72 (0,5°C) | 7,00 (1°C) | - | 6,90 (0,6°C) |
| pH après maturation | 6,73 (-1,5°C) | 7,07 (0,1°C) | 6,82 (-2,4°C) | 7,01 (-2°C) |
| Foisonnement du mélange (%) | 103 | 111 | 97 | 98 |
| Température de sortie (°C ) | -5,4 | -5,6 | -6 | -5,6 |

On note que l'aptitude au foisonnement des préparations réalisées avec les isolats de protéines de pois conforme à l'invention est identique à celle du témoin et n'est pas significativement différent de celle réalisée avec la protéine de pois.

*Mesures de la viscosité*

| Viscosité (Pa.s) | | | |
|---|---|---|---|
| | Maturation | 10 s-1 | 100 s-1 |
| Témoin | Avant | 0,24 | 0,098 |
| | Après | 0,23 | 0,095 |

(suite)

| Viscosité (Pa.s) | | | |
|---|---|---|---|
| Recette n°1 | Avant | 0,36 | 0,18 |
| | Après | 0,35 | 0,2 |
| Recette n°2 | Avant | 0,18 | 0,10 |
| | Après | 0,18 | 0,10 |
| Recette n°3 | Avant | 0,2 | 0,11 |
| | Après | 0,16 | 0,098 |

La recette avec la protéine de pois présente les plus fortes viscosités. Les recettes avec isolat de protéines de pois conformes à l'invention sont équivalentes à la recette témoin.

*Analyse des tailles de particules*

L'analyse de la taille des particules a été réalisée à différentes étapes de préparation de la crème glacée dans le but d'évaluer la capacité émulsifiante et la stabilité de l'émulsion :

o Distribution des tailles des globules gras après l'étape d'homogénéisation,
o Distribution des tailles de globules gras après l'étape de maturation,
o Distribution des tailles des globules gras de la crème glacée (équivalent à la distribution des tailles des globules gras après l'étape de fouettage).

Ces analyses ont été également faites avec addition de SDS à 0,1 % afin de déterminer si l'émulsion a été créée par agrégation / floculation ou par coalescence.

Les résultats sont présentés dans les **Figures 5 à 8.**

Pour chaque recette, la distribution des tailles de particules a tendance à diminuer ou à devenir plus monomodale après maturation.
Cette évolution est très perceptible pour la recette avec la protéine de pois NUTRALYS® S85F. Cela montre que la protéine de pois NUTRALYS® S85F est le plus lent émulsifiant pour migrer à l'interface des globules gras.
Au contraire, la recette n°3 (avec l'isolat de protéines de pois conforme à l'invention n°2) est aussi bon émulsifiant que la recette à 100 % protéines de lait.
L'isolat de protéines de pois conforme à l'invention n°1 est moins émulsifiant que l'isolat de protéines de pois conforme à l'invention n°2 après homogénéisation mais a tendance à être aussi bon après maturation.

**Exemple 4 : Substitution totale des protéines de lait par les isolats de protéines de pois dans les crèmes glacées/desserts glacés**

3 recettes sont élaborées pour ces crèmes glacées végétaliennes :
o Témoin : 100 % protéines de pois NUTRALYS® S85F,
o Recette 1 : 100 % d'isolats de protéines de pois selon l'invention n°1,
o Recette 2 : 100 % d'isolats de protéines de pois selon l'invention n°2.

| | Témoin | Recette 1 | Recette2 |
|---|---|---|---|
| Eau | 64,25 | 64,25 | 64,25 |
| Saccharose | 12,00 | 12,00 | 12,00 |
| Huile de coco hydrogénée | 8,00 | 8,00 | 8,00 |
| Sirop de glucose Roquette 4280 | 11,50 | 11,50 | 11,50 |
| NUTRALYS® S85F | 3,50 | 0,00 | 0,00 |
| Stabilisants (CREMODAN SE30) | 0,25 | 0,25 | 0,25 |

(suite)

| | Témoin | Recette 1 | Recette2 |
|---|---|---|---|
| Arôme vanille IFF 10836706 | 0,50 | 0,50 | 0,50 |
| Isolat de protéines de pois selon l'invention n°1 | 0,00 | 3,50 | 0,00 |
| Isolat de protéines de pois selon l'invention n°2 | 0,00 | 0,00 | 3,50 |
| Total | 100 % | 100 % | 100 % |

Les quantités étant indiquées en pourcentage en poids.

Les valeurs nutritionnelles (pour 100 g sont les suivantes) :

| | Témoin | Recette 1 | Recette2 |
|---|---|---|---|
| Valeur énergétique (kcal) | 172 | 172 | 172 |
| Matières grasses totales | 8,5 | 8,5 | 8,5 |
| dont matières grasses saturées | 7,6 | 7,6 | 7,6 |
| Hydrates de carbone, sans fibres | 21,2 | 21,2 | 21,2 |
| dont les sucres | 14,6 | 14,6 | 14,6 |
| Fibres | 0,1 | 0,1 | 0,1 |
| Protéines | 2,8 | 2,8 | 2,8 |
| Sel (sodiumx2,5) | 0,11 | 0,14 | 0,14 |
| Matière sèche | 33,1 | 33,2 | 33,2 |

Le procédé de fabrication est le suivant :

o Chauffer l'eau à 45°C,
o Mélanger les ingrédients,
o Mélanger les stabilisants avec le saccharose,
o Ajouter l'eau et mélanger pendant 20 minutes,
o Introduire la matière grasse (huile de coco fondue) et mélanger,
o Pasteuriser à 80°C pendant 3 minutes
o Refroidir à 70°C,
o Homogénéiser le mélange à 200 bars (en 2 étages) - 30 % dans le 2$^{ème}$ étage,
o Ajouter l'arôme,
o Laisser mâturer sous agitation à 4°C pendant 20 minutes,
o Fouetter entre 90 - 100 % et refroidir à -30°C pendant 1 heure,
o Stocker à - 18°C.

<u>**Analyses**</u>

***Mesure du pouvoir foisonnant (desserts glacés)***

o Pesée d'une coupelle de volume V donné, vide
Masse mesurée = $m_c$ où $m_c$ est la masse de la coupelle vide
o Pesée d'une coupelle de volume V donné, remplie à ras bord par le mélange avant foisonnement

$$\text{Masse mesurée} = mc + m_{mix} \text{ où } m_{mix}$$

est la masse de mélange correspondant au volume V
o Pesée d'une coupelle de volume V donné, remplie à ras bord par le mélange après foisonnement (sortie de

congélateur)

$$\text{Masse mesurée} = mc + m_{glace}$$

où $m_{glace}$ est la masse de glace (mélange foisonné en sortie du congélateur) correspondant au volume V.

La mesure de foisonnement est alors donnée par la formule :

$$\text{Foisonnement} = \frac{(m_{mix} - m_{glace})}{m_{glace}} \times 100$$

*Caractérisation du procédé de préparation*

| | Témoin | Recette 1 | Recette2 |
|---|---|---|---|
| pH après maturation | 7,25 | 6,84 | 6,89 |
| Densité du mélange (g/ml) | 1,05 | 1,06 | 1,07 |
| Pouvoir foisonnant (%) | 89 | 80 | 101 |
| Température à la sortie du congélateur | -5 | -4,8 | -4,8 |

*Mesure de viscosité*

o Mesures réalisées à 4°C
o Rhéomètre : Physica MCR 301 Anton Paar
o Géométrie : cylindre concentrique CC27
o Consigne : 0 à 200 $s^{-1}$ en 5 minutes

| Avant maturation | Viscosité (mPa.s) | | |
|---|---|---|---|
| Référence | 10 $s^{-1}$ | 100 $s^{-1}$ | **200** $s^{-1}$ |
| Témoin | 131 | 60 | 50 |
| Recette 1 | 23 | 51 | 40 |
| Recette 2 | 22 | 50 | 39 |

| Après maturation | Viscosité (mPa.s) | | |
|---|---|---|---|
| Référence | 10 $s^{-1}$ | 100 $s^{-1}$ | 200 $s^{-1}$ |
| Témoin | 120 | 65 | 56 |
| Recette 1 | 76 | 50 | 48 |
| Recette 2 | 74 | 50 | 44 |

On note ainsi une plus faible viscosité lorsque la recette comporte des isolats de protéines de pois selon l'invention.

*Mesure de la texture*

o Température de mesure : sortie du congélateur,
o Rhéomètre : Machine INSTRON 9506
o Géométrie : conique
o Consigne : déformation imposée jusqu'à 20 minutes,

| | Dureté (N) | | |
|---|---|---|---|
| Durée de stockage au congélateur avant mesure | 7 jours | 14 jours | 30 jours |
| Témoin | 38,4 | 42,7 | 60,5 |
| Recette 1 | 126,2 | 128,4 | 137 |
| Recette 2 | 76 | 67,9 | 63 |

On constate que la dureté est globalement meilleure pour les recettes avec isolats de protéines de pois selon l'invention. Plus particulièrement, l'isolat de protéines de pois selon l'invention n°2 présente une dureté remarquablement élevé, sans doute en relation avec son pouvoir foisonnant plus élevé (101 %).

*Mesure de la taille de l'émulsion du mélange et du dessert glacé*

Protocole :

o Analyseur laser de taille de particules (granulomètre) MALVERN 3000 en voie liquide (le solvant est de l'eau déminéralisée)
o Modèle optique : 1,46+0.001i avec une vitesse d'agitation de 1900 tours/minutes.

Les mélanges avant et après maturation sont caractérisés avec et sans SDS :

o Sans SDS : l'échantillon est introduit directement dans le bécher du granulomètre ne contenant que de l'eau,
o Avec SDS : 0,1 %, soit 0,6 g de SDS est introduit directement dans le bécher du granulomètre. Après solubilisation du SDS, l'échantillon est ajouté pour analyse.

La crème glacée finale est introduite non décongelée dans le bol du granulomètre. Après fusion et dispersion de la glace, la mesure est effectuée.

La taille de l'émulsion, avant et après maturation, avec et sans SDS, est donnée dans le tableau suivant.

| Avant maturation, sans SDS | Dx (10) µm | Dx (50) µm | Dx (90) µm | Dmode µm | D (4,3) µm |
|---|---|---|---|---|---|
| Témoin | 0,073 | 0,377 | 3,380 | 0,429 | 1,410 |
| Recette 1 | 0,693 | 10,300 | 22,200 | 13,000 | 11,400 |
| Recette 2 | 0,520 | 8,400 | 18,200 | 10,000 | 9,310 |

Sans SDS, l'émulsion du mélange contenant de la protéine de pois (témoin) présente une taille de particules plus petite que les émulsions préparées à partir des isolats de protéines de pois selon l'invention.

| Avant maturation, avec SDS | Dx (10) µm | Dx (50) µm | Dx (90) µm | Dmode µm | D (4,3) µm |
|---|---|---|---|---|---|
| Témoin | 0,103 | 0,340 | 1,010 | 0,389 | 0,698 |
| Recette 1 | 0,065 | 0,605 | 5,110 | 0,621 | 1,650 |
| Recette 2 | 0,115 | 0,503 | 1,830 | 0,564 | 0,913 |

Avec SDS, les agglomérats de matières grasses sont dispersés, and le Dmode est ainsi plus proche pour les 3 essais. A noter que la formule avec l'isolat de protéines de pois selon l'invention n°1 présente un pic de granulométrie avec de plus larges particules.

| Après maturation, sans SDS | Dx (10) µm | Dx (50) µm | Dx (90) µm | Dmode µm | D (4,3) µm |
|---|---|---|---|---|---|
| Témoin | 0,085 | 0,379 | 2,690 | 0,433 | 1,210 |
| Recette 1 | 0,102 | 5,300 | 16,200 | 8,470 | 6,780 |
| Recette 2 | 0,088 | 4,460 | 15,400 | 7,820 | 6,150 |

| Après maturation, avec SDS | Dx (10) µm | Dx (50) µm | Dx (90) µm | Dmode µm | D (4,3) µm |
|---|---|---|---|---|---|
| Témoin | 0,103 | 0,329 | 0,894 | 0,381 | 0,658 |
| Recette 1 | 0,039 | 0,509 | 4,830 | 0,616 | 1,620 |
| Recette 2 | 0,098 | 0,504 | 2,070 | 0,573 | 1,110 |

On ne constate aucun changement majeur après maturation. Les formules avec les isolats de protéines de pois selon l'invention sont plus polydisperses par rapport à celle avec les protéines de pois.
La taille d'émulsion de la crème glacée, en tant que telle, est mesurée sans présence de SDS.

| Sans SDS | Dx (10) µm | Dx (50) µm | Dx (90) µm | Dmode µm | D (4,3) µm |
|---|---|---|---|---|---|
| Témoin | 0,092 | 0,333 | 3,950 | 0,352 | 2,390 |
| Recette 1 | 0,131 | 0,776 | 15,900 | 0,531 | 5,820 |
| Recette 2 | 0,178 | 0,814 | 51,400 | 0,518 | 14,500 |

La taille du pic majeur (Dmode) est similaire pour les trois crèmes glacées. Cependant, les formules avec les isolats de protéines de pois selon l'invention sont plus polydisperses, spécialement avec l'isolat n°2.
Une étude comparative a été réalisée avec des glaces commerciales, qui montrent que ces dernières ont encore plus de particules grossières que les recettes témoins, 1 et 2, en relation avec leur contenu élevée en globules de matières grasses.

*Mesure du comportement à la fonte*

Protocole :

De manière empirique, des échantillons de dessert glacés d'un volume donné sont posés sur une grille au-dessus d'un bécher. On mesure ensuite :

o Le temps au bout duquel la première goutte tombe dans le bécher,
o Le % de glace fondue au cours du temps, pendant 3 heures.

La **Figure 9** illustre bien le fait que la fonte est plus faible pour les crèmes glacées préparées à partir des isolats de protéines de pois selon l'invention.

*Analyse sensorielle*

Le panel est constitué de 15 personnes.
Le panel est, comme dans les exemples précédents, qualifié à la dégustation de produits formulés avec la protéine de pois. Il a reçu une formation et un entraînement afin de vérifier ses performances en termes de :

- Capacité à discriminer les produits
- Consensus, utilisation correcte des descripteurs
- Répétabilité, capacité à repérer un doublon.

Comparés aux glaces préparées avec les protéines de pois, celles de l'invention sont moins amères, ont moins le gout de pois et sont moins colorées.
Les desserts glacés avec les isolats de protéines de pois selon l'invention n°1 présentent un peu de cristaux de glace et un goût vanille plus prononcé, sont plus sucrés, et plus gras que les autres produits.

Les desserts glacés avec les isolats de protéines de pois selon l'invention n°2 sont sucrés et gras, plus crémeux. Ils présentent un goût « thé vert » un peu plus prononcé.

*Conclusion*

Durant le procédé de fabrication des desserts glacés, les isolats de protéines de pois selon l'invention conduisent à une plus faible viscosité en comparaison avec les protéines de pois.

La texture avec l'isolat n°1 est plus dure, mais n'est pas perçue par les panélistes.

Les deux isolats conduisent surtout à abaisser la fonte des desserts glacés correspondant.

En terme de goût, la meilleure perception est pour les desserts glacés préparés avec l'isolat n°1, de saveur sucrée et d'arôme prononcé, de moindres amertume et saveur « pois ».

**Exemple 5** : **comparaison des propriétés sensorielles de crèmes glacées**

Le panel est constitué de 20 personnes.

Le panel est qualifié à la dégustation de produits formulés avec la protéine de pois. Il a reçu une formation et un entraînement afin de vérifier ses performances en termes de :

- Capacité à discriminer les produits
- Consensus, utilisation correcte des descripteurs
- Répétabilité, capacité à repérer un doublon

En effet, il a reçu une formation pour la bonne utilisation des descripteurs sensoriels de goût et de texture, tels que, par exemple :

| Descripteur | Définition | Mode opératoire | Référence |
|---|---|---|---|
| **Flaveurs** | | | |
| **Gout Pois** | Goût typique de pois. | Goutez le produit. | Pois |
| **Sucré** | Saveur élémentaire provoquée par une solution de saccharose. | Goutez le produit. | Sucre en poudre |
| **Texture en bouche** | | | |
| **Dur** | Evaluation de la force nécessaire pour obtenir une déformation ou une rupture du | Comprimez une unité de produit entre les dents incisives. | Confiserie type sucre cuit |
| | produit. (pas dur / très dur) | | |
| **Aéré** | Evaluation de la quantité de bulles d'air emprisonnées et visibles. (pas aéré / très aéré) | Explorez visuellement et tactilement en déplaçant le doigt parallèlement à l'état de surface et exercez des pressions différentes de haut en bas. | Mousse au chocolat |
| **Aqueux** | Evaluation de propriété de texture de la surface qualifiant la perception de la quantité d'eau libérée par un produit. (pas aqueux / très aqueux) | Dégustez une unité de produit et évaluez la quantité d'eau perçue en bouche. | Pastèque |
| **Cristaux d'eau** | Evaluation de la présence de cristaux d'eau (pas de cristaux / beaucoup de cristaux) | Frottez la langue contre le palais et vérifiez si le produit contient des cristaux | Glace recristallisée |
| **Gras** | Evaluation de la pellicule grasse après déglutition. (pas gras / très gras) | Après déglutition d'une unité de produit, évaluez la présence ou non d'une pellicule grasse au niveau du palais ou des dents en balayant leur surface avec la langue. | Huile d'olive |

La méthode leur permet également de s'exprimer sur d'autres descripteurs qui n'auraient pas été anticipés dans cette liste.

*Produits*

Les crèmes glacées sont les recettes n°1, n°2 et n°3 celles de l'exemple 9.

*Conditions de dégustation*

- Au laboratoire d'analyse sensorielle : box individuels de dégustation, murs blancs, ambiance calme (pour faciliter la concentration)
- Lumière blanche (pour avoir exactement la même vision du produit)
- En fin de matinée ou d'après-midi (pour être au maximum des capacités sensorielles)
- Produits anonymés par un code à 3 chiffres (pour éviter que le code n'influence l'appréciation des produits)
- Produits présentés dans un ordre aléatoire (pour éviter les effets d'ordre et de rémanence)

*Exercice*

La méthode employée pour comparer les produits a été le Profil Flash (JM Sieffermann, 2000).

Les produits sont tous présentés simultanément. Il s'agit de comparer les produits entre eux en réalisant une succession de classements : les panélistes choisissent les descripteurs qui leur semblent les plus pertinents pour discriminer les produits entre eux et classent les produits selon ces descripteurs, il est possible que plusieurs produits soient regroupés sur un même rang.

Exemple :

Descripteur sensoriel : *Croustillant*

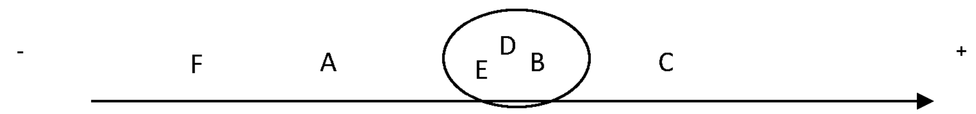


*Traitement des données*

La méthode de traitement statistique adaptée à ce type de données est l'Analyse Factorielle Multiple (J. Pagès, 1994) sur les données-rangs des produits. Pour que les résultats soient plus clairs, l'AFM a été réalisée plusieurs fois; en global, et par critère (aspect, odeur, goût, texture). Les graphiques présentés synthétisent l'ensemble des résultats fournis par cette méthode.

Les analyses ont été réalisées à l'aide du logiciel R (en vente libre) :

R version 2.14.1 (2011-12-22)
Copyright (C) 2011 The R Foundation for Statistical Computing
ISBN 3-900051-07-0
20 Platform: i386-pc-mingw32/i386 (32-bit)

Le logiciel est un environnement de travail qui nécessite le chargement de modules contenant les fonctions de calcul comme le package FactoMineR version 1.19

**Résultats**

Les résultats sont présentés dans la **Figure 10.**

Les 3 échantillons sont tous évalués en texture onctueux/crémeux, froid et fondant et en goût pois, vanille et amer.

Néanmoins quelques descripteurs permettent de les différencier :

- La crème glacée au NUTRALYS® S85F apparaît plus dure avec un goût de pois et carton.
- Celle avec isolat de protéines de pois conforme à l'invention n° 1 est plus grasse et aérée avec une note noix.
- Celle avec isolat de protéines de pois conforme à l'invention n° 2 est jugée plus sucrée.

**Exemple 6** : **Utilisation des isolats de protéines de pois dans des matrices de « non dairy coffee creamers/ whiteners »**

**a. Substitution de 100 % des caséinates de sodium**

L'objectif est ici de substituer 100 % des caséinates de sodium et d'obtenir un produit stable dans le café.
La mesure de la viscosité des émulsions après pasteurisation et celle de la stabilité dans le café permettent d'illustrer l'amélioration des propriétés fonctionnelles des isolats de protéines de pois par rapport au NUTRALYS® dans leurs capacités à substituer les caséinates de sodium.
Les recettes élaborées sont les suivantes :

| | Recette 1 (Recette Contrôle) | Recette 2 | Recette 3 | Recette 4 |
|---|---|---|---|---|
| | 100 % caséinate de sodium (60 % MS) | 100 % isolats de protéines de pois selon l'invention n °1 (60 % MS) | 100 % isolats de protéines de pois selon l'invention n °2 (60 % MS) | 100 % NUTRALYS® S85F (60 % MS) |
| | % | % | % | % |
| Sirop de glucose 3072 (Roquette FRERES) | 45,85 | 45,85 | 45,85 | 45,85 |
| Huile de coco hydrogénée 32-34 (Dislab) | 23,36 | 23,36 | 23,36 | 23,36 |
| NUTRALYS® S85F batch WB67J | | | | 1,75 |
| Isolats de protéines de pois selon l'invention n°1 | | 1,75 | | |
| Isolats de protéines de pois selon l'invention n°2 | | | 1,75 | |
| Caséinate de sodium EM7 (DMV) | 1,75 | | | |
| $K_2HPO_4$ _E340 (Merck) | 1,46 | 1,46 | 1,46 | 1,46 |
| Dimodan HP_E471 (Danisco) | 0,58 | 0,58 | 0,58 | 0,58 |
| Eau | 27,00 | 27,00 | 27,00 | 27,00 |
| *TOTAL* | *100,00* | *100,00* | *100,00* | *100,00* |

Les quantités étant données en pourcentage en poids.
Le procédé de fabrication est le suivant :

o Fondre la matière grasse à 80° sous agitation constante,

o Ajouter le Dimodan HP dans la matière grasse fondue pour solubiliser les monoglycérides,

o Chauffer 90 % de l'eau à 50°C et ajouter les protéines. Hydrater sous agitation constante pendant 30 minutes,

o Solubiliser les sels de phosphates dans l'eau résiduelle à 40°C,

o Après 30 minutes d'hydratation, ajouter le sirop de glucose et les sels de phosphates dans le mélange principal,

o Pré-émulsifier le mélange de matières grasses/Dimodan HP dans le mélange principal pendant 5 minutes à 10.000 rpm,

◦ Placer le produit à 75°C dans un homogénéisateur à haute pression Niro Panda 2K Soavi (GEA) à une pression de 160 bar au 1er étage, 30 bar dans le deuxième étage,

o Pasteuriser à 80°C durant quelques secondes puis placer le produit dans l'eau froide pour stopper le traitement thermique

Les analyses réalisées sur la formulation sont les suivantes :

*1. Analyse de viscosité*

Les mesures de viscosité des émulsions concentrées après l'étape de traitement thermique sont réalisées à 65°C, température habituelle d'atomisation.

Appareillage :

o Rhéomètre Physica MCR 301 Anton Paar
o Géométrie : CC27
o Méthode 0 à 1000 $s^{-1}$ en 660 s

Les résultats obtenus sur les différentes recettes sont les suivants :

| | Viscosity (mPa.s) | | | | |
|---|---|---|---|---|---|
| | 5s-1 | 10s-1 | 40s-1 | 100s-1 | 1000s-1 |
| Recette Contrôle | 89 | 69 | 47 | 44 | 42 |
| Recette 2 | 77 | 59 | 40 | 34 | 24 |
| Recette 3 | 77 | 60 | 42 | 36 | 26 |
| Recette 4 | 775 | 530 | 270 | 197 | 85 |

Les viscosités des émulsions des recettes 2 et 3 après pasteurisation sont plus proches du témoin lait que celle de la recette 4 préparée avec de la protéine de pois, ce qui permet de sécher une émulsion de faible viscosité à haute matière sèche comme ici à 60 % en poids.

*2. Solubilité en fonction du pH*

| | NUTRALYS S85F | isolats de protéines de pois selon l'invention n°1 | isolats de protéines de pois selon l'invention n°2 | Caséinate de sodium EM7 (DMV) |
|---|---|---|---|---|
| pH 3 | 50,3 | 53,3 | 58,9 | 82,0 |

(suite)

| | NUTRALYS S85F | isolats de protéines de pois selon l'invention n°1 | isolats de protéines de pois selon l'invention n°2 | Caséinate de sodium EM7 (DMV) |
|---|---|---|---|---|
| pH 4 | 15,2 | 39,7 | 38,6 | 7,0 |
| pH 5 | 11,3 | 37,7 | 36,8 | 9,0 |
| pH 6 | 21,2 | 50,3 | 53,9 | 94,0 |
| pH 7 | 36,8 | 54,8 | 59,9 | 94,0 |
| pH 8 | 55,1 | 57,4 | 62,4 | 94,0 |

La **Figure 11** illustre l'évolution de la solubilité des isolats de protéines de pois selon l'invention par rapport au caséinate, en fonction du pH, et traduit leur excellent comportement.

*Evaluation de la stabilité dans le café*

*Reconstitution du café :*

o Peser 2 g de café soluble
o chauffer de l'eau de consommation (charge en calcium de 136mg et en magnésium de 60mg) à 80°C et ajouter 135 g de ladite eau au 2 g,
o ajouter 12,7 g d'émulsion concentrée dans le café.

La floculation dans le café semble être moins importante avec les recettes contenant les isolats de protéines de pois selon l'invention, par rapport à celle obtenue avec la protéine de pois. Cependant, ce peut être corrélé avec l'amélioration de la solubilité desdits isolats par rapport à la protéine de pois.

**b. Substitution de 50 % des caséinates de sodium**

L'objectif est ici de substituer 50 % des caséinates de sodium et d'obtenir un produit stable dans le café.
La mesure de la viscosité des émulsions après pasteurisation et celle de la stabilité dans le café permettent d'illustrer l'amélioration des propriétés fonctionnelles des isolats de protéines de pois par rapport au NUTRALYS® dans leurs capacités à substituer les caséinates de sodium.
Les recettes élaborées sont les suivantes :

| | Recette 1 (Recette Contrôle) | Recette 2 | Recette 3 |
|---|---|---|---|
| | 100 % caséinate de sodium (60 % MS) | 50 % isolats de protéines de pois selon l'invention n°2 + 50 % caséinate de sodium (60 % MS) | 50 % NUTRALYS® S85F + 50 % caséinate de sodium (60% MS) |
| | % | % | % |
| Sirop de glucose 3072 (Roquette FRERES) | 45,85 | 45,85 | 45,85 |
| Huile de coco hydrogénée 32-34 (Dislab) | 23,36 | 23,36 | 23,36 |
| NUTRALYS® S85F batch WB67J | | | 0,87 |
| Isolats de protéines de pois selon l'invention n°2 | | 0,87 | |
| Caséinate de sodium EM7 (DMV) | 1,75 | 0,88 | 0,88 |
| Joha@ KM2_E339_E452_E331 | 1,46 | 1,46 | 1,46 |
| Dimodan HP_E471 (Danisco) | 0,58 | 0,58 | 0,58 |

(suite)

| | Recette 1 (Recette Contrôle) | Recette 2 | Recette 3 |
|---|---|---|---|
| | 100 % caséinate de sodium (60 % MS) | 50 % isolats de protéines de pois selon l'invention n°2 + 50 % caséinate de sodium (60 % MS) | 50 % NUTRALYS® S85F + 50 % caséinate de sodium (60% MS) |
| Eau | 27,00 | 27,00 | 27,00 |
| *TOTAL* | *100, 00* | *100,00* | *100,00* |

Les quantités étant données en pourcentage en poids.

Les valeurs nutritionnelles pour 100 g sont les suivantes.

| N° de la recette | Recette 1 | Recettes 2 et 3 |
|---|---|---|
| Humidité (%) | 40 | 40 |
| Energie calorique (kCal) pour 100 g | 369 | 369 |
| Matières grasses (g) | 24,0 | 24,0 |
| Teneur en protéines (g)<br>*Dont protéines de lait*<br>*isolat protéines de pois* | 1,6<br>1,6<br>0 | 1,5<br>0,8<br>0,7 |
| Hydrates de carbone (g)<br>*Dont sucres* | 33,0<br>5,3 | 33,0<br>5,3 |

Le procédé de fabrication est le suivant :

o Fondre la matière grasse à 80° sous agitation constante,
o Solubiliser les mono et diglycérides dans l'huile liquide,
o Solubiliser les protéines en poudre dans de l'eau à 50°C pendant 30 minutes,
o Ajouter le sirop de glucose et les sels de phosphates déjà solubilisé dans une part d'eau
o Pré-émulsifier les matières grasses fondues dans la solution aqueuse par agitation à 10.000 rpm
o Pasteuriser à 80°C durant quelques secondes
o Placer le produit à 75°C dans un homogénéisateur à haute pression Niro Panda 2K Soavi (GEA) à une pression de 160 bar au 1er étage, 30 bar dans le deuxième étage,
◦ Diluer le mélange à 50 % de Matière Sèche pour atomiser à 180°C ($T_{inlet}$) et 90°C ($T_{outlet}$) dans dispositif présentant une capacité d'évaporation de 10 à 12 l/h.

Les analyses réalisées sur la formulation sont les suivantes :
1) pH de l'émulsion

| pH | Recette 1 | Recette 2 | Recette 3 |
|---|---|---|---|
| Sur l'émulsion à 25°C | 7,69 | 9,24 | 8,72 |
| Sur le café à 75°C | 6,45 | 6,35 | 6,10 |

2) Capacité d'émulsion

La mesure de la taille des globules lipidiques (par analyseur laser de taille de particules) permet de déterminer la capacité des isolats de protéines de pois selon l'invention à former les globules lipidiques de taille la plus petite possible.

| | Dx(10) (μm) | Dx(50) (μm) | Dx(90) (μm) | D [4,3] (μm) | Mode (μm) |
|---|---|---|---|---|---|
| Recette 1 | 0,281 | 0,577 | 1,23 | 0,681 | 0,551 |
| Recette 2 | 0,289 | 0,563 | 1,10 | 0,668 | 0,559 |
| Recette 3 | 0,279 | 0,564 | 1,23 | 1,15 | 0,534 |

Ces résultats montrent bien que le mélange 50/50 présente une distribution granulométrique semblable au témoin 100 % caséinate.

3) Viscosité des émulsions à 60% de matière sèche à 65 °C (avant atomisation)

Appareillage :

o Rhéomètre Physica MCR 301 Anton Paar
o Géométrie : CC27
o Méthode 0 à 1000 $s^{-1}$ en 660 s

| | Viscosité (mPa.s) | | | |
|---|---|---|---|---|
| | 5 $s^{-1}$ | 10 $s^{-1}$ | 40 $s^{-1}$ | 100 $s^{-1}$ |
| Recette 1 | 89 | 69 | 47 | 44 |
| Recette 2 | 49 | 48 | 43 | 39 |
| Recette 3 | 170 | 132 | 89 | 77 |

La plus faible viscosité du mélange 50/50 permet d'atomiser à une matière sèche supérieure à celle requise classiquement pour les caséinates.

*4) Stabilisation du « non dairy coffee creamer » en poudre dans le café*

*Reconstitution du café :*

a. Peser 2 g de café soluble

b. ajouter 8 g d'émulsion et 150 ml d'eau de consommation (charge en calcium de 136 mg et en magnésium de 60 mg) à 80°C

La stabilité de l'émulsion dans le café est déterminée par la mesure de la variation de couleur de la préparation - mesure de coloration selon les codifications L (balance des blancs), a (balance des jaunes) et b (balance des verts), la couleur blanche dans le café étant un des critères clefs recherchés par l'industriel et le consommateur.
L'écart de 2 points pour la mesure du paramètre L des cafés préparés à partir du mélange 50/50 (L= +96) en regard des cafés témoins préparés à partir de caséinates (L= +98) traduit une excellente stabilité du mélange avec les isolats de protéines de pois conformes à l'invention.

**Exemple 7. Utilisation des isolats de protéines de pois pour la préparation de yaourts brassés**

L'objectif est ici de substituer 30 % des protéines de lait.

Les recettes élaborées sont les suivantes :

| En % | **Recette Contrôle** | Recette avec protéines de pois **Recette 1** | Recette avec isolat de protéines de pois conformes à l'invention n °1 **Recette 2** | Recette avec protéines de pois **Recette 3** |
|---|---|---|---|---|
| Lait écrémé reconsititué | 88,80 | 74,50 | 74,50 | 74,50 |
| Crème (Les faves 35% MG) | 2,75 | 2,42 | 2,42 | 2,42 |
| Sucre | 6,00 | 6,00 | 6,00 | 6,00 |
| Amidon modifié CLEARAM® CR 4015 de Roquette Frères | 1,50 | 3,20 | 3,20 | 3,20 |
| NUTRALYS® S85F | | 1,40 | | |
| NUTRALYS® F85F | | | | 1,40 |
| Isolat protéines de pois selon l'invention n°1 | | | 1,40 | |
| PROMILK 852 A Ingredia | 0,77 | | | |
| Pectine CM 020 HERBSTREITH & FOX | 0,18 | 0,16 | 0,16 | 0,16 |
| Eau | | 12,32 | 12,32 | 12,32 |
| | | | | |
| Total | 100,00 | 100,00 | 100,00 | 100 |

Les quantités étant données en pourcentage en poids.

| | | | | |
|---|---|---|---|---|
| MS (matière sèche) | 17,73 | 18,28 | 18,31 | 18,28 |
| | | | | |
| Protéines totales | 3,70 | 3,70 | 3,70 | 3,70 |
| Protéines laitières | 3,70 | 2,58 | 2,58 | 2,58 |
| Protéines végétales | 0,00 | 1,12 | 1,12 | 1,12 |
| Lipides | 1,01 | 1,01 | 1,01 | 1,01 |
| Glucides | 12,30 | 12,99 | 12,99 | 12,99 |
| dont sucres | 10,98 | 10,14 | 10,14 | 10,14 |
| Kcal/100g | 73,10 | 75,84 | 75,86 | 75,84 |
| | | | | |
| Taux de substitution | 0,00 | 30,19 | 30,19 | 30,19 |

Le procédé de fabrication est quant à lui le suivant :

o chauffer de l'eau à 60°C,

o ajouter les protéines et laisser hydrater pendant 1 heure,

o ajouter la crème sous POLYTRON durant 2 minutes,

o ajouter le mélange sucre/amidon pendant 10 à 15 minutes,

o homogénéiser à haute pression (2 étages : $1^{er}$ étage 180 bars - $2^{ème}$ étage 200 bars) à 75-80°C,

o pasteuriser avec un échangeur tubulaire Power Point International à 95°C, 6 minutes - 20 l/h,

o ajouter les ferments (YoFlex® YF-L812 - 50 U/250L),

o acidifier à 42°C jusqu'à pH 4,6 (durée d'acidification de 5 - 6 heures),

o agiter à 3600 rpm rt à 42°C,

o lisser à 37/38°C à 3600 rpm en Spindle 2G

o mettre en pot et stocker à 4°C.

*Mesure de la viscosité*

| | Température de mesure : 13°C |
|---|---|
| Rhéomètre : | Physica MCR 301 Anton Paar |
| Géométrie : | CC27 |
| méthode : | 0 à 350 $s^{-1}$ en 180 s et retour de 350 $s^{-1}$ à 0 en 180 s |

Les valeurs sont données à ± 5 %.

| | J+3 | | | | | |
|---|---|---|---|---|---|---|
| | Viscosité (Pa.s) | | | | | Surface d'hystérésis (Pa) |
| référence | $5s^{-1}$ | 10 $s^{-1}$ | 40 $s^{-1}$ | 100 $s^{-1}$ | 350 $s^{-1}$ | |
| Recette 2 | 4,3 | 2,6 | 1,03 | 0,53 | 0,2 | 4130 |
| Recette 1 | 3,9 | 2,38 | 0,98 | 0,52 | 0,21 | 3335 |
| Recette 3 | 3,76 | 2,3 | 0,97 | 0,53 | 0,22 | 2610 |
| Recette Contrôle | 3,12 | 2,1 | 0,79 | 0,4 | 0,15 | 2420 |

| | J+7 | | | | | |
|---|---|---|---|---|---|---|
| | Viscosité (Pa.s) | | | | | Surface d'hystérésis (Pa) |
| référence | $5s^{-1}$ | 10 $s^{-1}$ | 40 s-1 | 100 $s^{-1}$ | 350 $s^{-1}$ | |
| Recette 2 | 4,12 | 2,49 | 1,02 | 0,535 | 0,212 | 3710 |
| Recette 1 | 3,26 | 2,21 | 0,84 | 0,41 | 0,16 | 2551 |
| Recette 3 | 3,71 | 2,29 | 0,96 | 0,52 | 0,21 | 2905 |
| Recette Contrôle | 4,17 | 2,51 | 1,02 | 0,53 | 0,2 | 4200 |

| | J+14 | | | | | |
|---|---|---|---|---|---|---|
| | Viscosité (Pa.s) | | | | | Surface d'hystérésis (Pa) |
| référence | $5s^{-1}$ | 10 $s^{-1}$ | 40 $s^{-1}$ | 100 $s^{-1}$ | 350 $s^{-1}$ | |
| Recette 2 | 3,93 | 2,38 | 0,99 | 0,524 | 0,21 | 3260 |
| Recette 1 | 3,54 | 2,17 | 0,94 | 0,52 | 0,22 | 2420 |
| Recette 3 | 4,13 | 2,51 | 1,02 | 0,51 | 0,19 | 4860 |

(suite)

| | J+14 | | | | | |
|---|---|---|---|---|---|---|
| | Viscosité (Pa.s) | | | | | Surface d'hystérésis (Pa) |
| référence | $5s^{-1}$ | $10\ s^{-1}$ | $40\ s^{-1}$ | $100\ s^{-1}$ | $350\ s^{-1}$ | |
| Recette Contrôle | 2,74 | 1,82 | 0,7 | 0,35 | 0,138 | 2200 |

La Recette 3 a le comportement le plus proche de la Recette contrôle avec cependant une inversion de la courbe de viscosité par rapport à l'évolution de la viscosité de la Recette contrôle à J+7 et J+14.

La recette 3 reprend en effet en viscosité à J+14, et est la plus résistante au cisaillement à J+14.

La recette 1 est plus visqueuse et résistante au cisaillement que la Recette 3 à J+7, mais cela s'inverse à partir de J+ 14.

La Recette 2, avec l'isolat de protéines de pois conforme à l'invention, est la plus visqueuse des 4 recettes, et est plus visqueuse que la recette Contrôle. Sa viscosité diminue au cours du temps.

Ces résultats démontrent que par son comportement, l'isolat de protéines de pois conforme à l'invention permettrait de diminuer la quantité d'amidon dans cette Recette s'il est souhaité de la rapprocher de la viscosité de la Recette Contrôle.

Même chose mais dans une moindre mesure pour les Recettes 1 et 3.

**Exemple 8 : comparaison des propriétés sensorielles des yaourts brassés**

Pour l'évaluation du goût, le panel est constitué de 11 personnes. Pour celui de la texture, le panel est constitué de 12 personnes
Les panels sont qualifiés à la dégustation de produits formulés avec la protéine de pois. Ils ont reçu une formation et un entraînement afin de vérifier ses performances en termes de :

- Capacité à discriminer les produits
- Consensus, utilisation correcte des descripteurs
- Répétabilité, capacité à repérer un doublon

En effet, ils ont reçu une formation pour la bonne utilisation des descripteurs sensoriels de de goût et de texture, tels que, par exemple :

Descripteurs de goût :

| arôme / odeur | | | | saveur / sensation bouche |
|---|---|---|---|---|
| lacté | végétal | arôme | off flaveur | |
| lait | AG pois / végétal | vanille | papier / carton | acide |
| lactosérum | céréales | caramel | lessive | amer |
| lait fermenté | végétal | | chimique | salé |
| lait reconstitué bébé | noix fraiche | | colle | astringent / asséchant |
| yaourt | pomme de terre | | métallique | sucré |
| beurre | | | | piquant |

Descripteurs de texture

| Descripteur | Définition | Mode opératoire | Référence |
|---|---|---|---|
| **Aspect** | | | |
| **Brillant** | Aspect brillant ou lustré résultant de la tendance d'une surface à réfléchir la lumière. (pas brillant / très brillant) | Explorez visuellement le produit. | Jaune d'œuf cru |
| **Granuleux** | Evaluation de la granulosité et du nombre et taille de particules d'un produit. (pas granuleux / très granuleux) | Explorez visuellement le produit. | Sucre roux |
| **Texture à la cuillère** | | | |
| **Gélifié** | Evaluation de la consistance du produit. (pas gélifié / très gélifié) | Explorez visuellement le produit. | Gélatine |
| **Epais** | Evaluation de la facilité du produit à s'écouler sous une action mécanique. (pas épais / très épais) | Prenez une unité de produit avec une cuillère. Levez et tournez la cuillère. Vérifiez la capacité d'écoulement. | Miel |
| **Filant** | Evaluation de la capacité de filer sans se diviser en gouttes. (pas filant / très filant) | Appliquez la cuillère perpendiculairement à la surface, mettre en pression et la retirer verticalement doucement. | Eau |
| **Nappant** | Evaluation de la capacité de formation d'une nappe au dos de la cuillère. (pas nappant / très nappant) | Appliquez la cuillère perpendiculairement à la surface et la retirer verticalement et doucement. | Crème anglaise |
| **Texture en bouche** | | | |
| **Aqueux** | Evaluation de propriété de texture de la surface qualifiant la perception de la quantité d'eau libérée par un produit. (pas aqueux / très aqueux) | Dégustez une unité de produit et évaluez la quantité d'eau perçue en bouche. | Pastèque |
| **Asséchant** | Evaluation de la propriété de texture décrivant la perception de l'absorption d'humidité par le produit. (pas asséchant / très asséchant) | Mâchez une unité de produit et vérifiez si l'intérieur de la bouche devient sec. | Jus de canneberge |
| **Gras** | Evaluation de la pellicule grasse après déglutition. (pas gras / très gras) | Après déglutition d'une unité de produit, évaluez la présence ou non d'une pellicule grasse au niveau du palais ou des dents en balayant leur surface avec la lanque. | Huile d'olive |
| **Crémeux Onctueux** | Evaluation de la texture douce et fondante du produit. (pas onctueux / très onctueux) | Mâchez une unité de produit et vérifiez s'il provoque un contact mou et s'il tapisse la bouche. | Crème fraîche, crème épaisse |
| **Epais** | Evaluation de la facilité du produit à s'écouler en bouche. (pas épais / très épais) | Frottez la langue contre le palais et vérifiez si le produit s'écoule facilement. | Lait concentré sucré, miel |
| **Collant** | Evaluation de la force nécessaire pour décoller des produits qui adhèrent à l'intérieur de la cavité buccale. (pas collant / très collant) | Au bout de quelques mastications consécutives, pressez le produit entre les dents et mesurez la force nécessaire pour qu'il se décolle des dents. | Caramel mou |
| **Granuleux** | Evaluation de la granulosité et du nombre et taille de particules d'un produit. (pas granuleux / très granuleux) | Frottez la langue contre le palais et vérifiez si le produit contient des particules. | Sucre roux |

*Produits*

Les 3 produits de l'exemple 11 testés (recette contrôle, recette 1 et recette 2) ont été évalués 3 jours après leur production et ont été présentés à une température d'environ 10°C (produits stockés au réfrigérateur, évalués à sa sortie).

*Conditions de dégustation*

- Au laboratoire d'analyse sensorielle : box individuels de dégustation, murs blancs, ambiance calme (pour faciliter la concentration)
- Lumière blanche (pour avoir exactement la même vision du produit)
- En fin de matinée ou d'après-midi (pour être au maximum des capacités sensorielles)
- Produits anonymés par un code à 3 chiffres (pour éviter que le code n'influence l'appréciation des produits)
- Produits présentés dans un ordre aléatoire (pour éviter les effets d'ordre et de rémanence)

*Exercice*

La méthode employée pour comparer les produits a été le Profil Flash (JM Sieffermann, 2000).

Les produits sont tous présentés simultanément. Il s'agit de comparer les produits entre eux en réalisant une succession de classements : les panélistes choisissent les descripteurs qui leur semblent les plus pertinents pour discriminer les produits entre eux et classent les produits selon ces descripteurs, il est possible que plusieurs produits soient regroupés sur un même rang.

*Exemple :*

Descripteur sensoriel : <u>*Croustillant*</u>

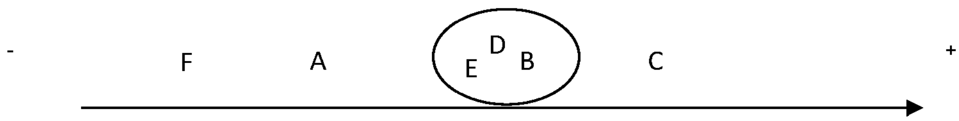


Deux listes de descripteurs, relatives au goût ou à la texture, ont été proposées aux panélistes à titre indicatif, celles-ci vous sont fournies en annexe de ce rapport.

*Traitement des données*

La méthode de traitement statistique adaptée à ce type de données est l'Analyse Factorielle Multiple (J. Pagès, 1994) sur les données-rangs des produits. Pour que les résultats soient plus clairs, l'AFM a été réalisée plusieurs fois; en global, et par critère (aspect, odeur, goût, texture). Les graphiques présentés synthétisent l'ensemble des résultats fournis par cette méthode.

Les traitements statistiques ont été effectués avec le logiciel R version 2.14.1 (2011-12-22).

*Résultats* :

Les résultats sont présentés dans les **Figures 12** (goût) et **13** (texture) :

- Le yaourt brassé au NUTRALYS® S85F a une texture filante et granuleuse en bouche accompagnée d'un goût de pois, carton, noix fraiche ;
- Celui avec la protéine de lait apparaît plus gras et crémeux, épais avec un aspect granuleux, son goût est plus typique du yaourt, sucré et lacté ;
- Celui avec isolat de protéines de pois conforme à l'invention n° 1 se situe entre le controle et les essais avec NUTRALYS® S85F, se démarque par un goût céréale et lait fermenté ainsi qu'une texture particulièrement nappante en bouche.

**Exemple 9. Fromages végétaliens de type Mozzarella contenant des isolats de protéines de pois.**

La recette de fromage végétalien contenant des isolats de protéines de pois selon l'invention n°2 est donnée dans le tableau suivant.
Le témoin est une recette contenant quant à elle des protéines de pois de type NUTRALYS F85F.

| Recette | N°1 | N°2 |
|---|---|---|
| | NUTRALYS F85F | Isolat de protéines de pois selon l'invention n°2 |
| Huile de colza | 7,98 | 7,98 |
| Huile de coco | 14,82 | 14,82 |
| Fécule de pomme de terre acétéylée CLEARAM PG 9020 de Roquette Frères | 22,9 | 22,9 |
| protéines ou isolat de protéines de pois | 5 | 5 |
| Acide citrique | 0,3 | 0,3 |
| Sel | 1,7 | 1,7 |
| Levures inactivées | 1,1 | 1,1 |
| Eau | 41,7 | 41,9 |
| Saveur fromage | 0,25 | 0,25 |
| Amidon de manioc | 4 | 4 |
| OSI Pea masker 9767A | 0,25 | 0,25 |
| Total | 100 | 100 |

Les quantités étant données en pourcentage en poids.
Le procédé de préparation de la recette est le suivant :

- o ajouter l'eau dans un récipient muni d'une double enveloppe chauffante (type Stephan Bowl - www.stephan-machinery.com/index.php?id=3 ) et chauffer à 50°C,
- o ajouter tous les ingrédients poudre, à l'exception de l'acide citrique,
- o mélanger à 750 rpm pendant 2 minutes à 50°C,
- o ajouter les huiles et mélanger 2 minutes à 750 rpm,
- o ajouter l'acide citrique et mélanger 1 minute à 750 rpm,
- o chauffer le mélange à 75°C en mélangeant à la main régulièrement de manière à éviter que cela ne brunisse,
- o arrêter l'entrée de vapeur dans la double enveloppe
- o cuire pendant 5 minutes, en mélangeant régulièrement
- o arrêter la cuisson et stocker à +6°C.

Les analyses de couleur, de texture, de « shreddability » (capacité à être émietté) et de stabilité au gel/dégel et à la fonte ont été entreprises.
Si la couleur et la texture des deux recettes sont équivalentes, la recette avec l'isolat de protéines de pois n°2 présente un meilleur comportement en « shreddability » (capacité à être émietté) et une meilleure stabilité à la fonte. La saveur est par ailleurs reconnue meilleure avec la recette n°2.

**Exemple 10. Substitution totale des protéines de lait par les isolats de protéines de pois dans des crèmes desserts à la vanille.**

L'objectif est ici de substituer 100 % les protéines de lait en préparant des crèmes vanille.
Les recettes élaborées sont les suivantes :

| Ingrédients | Recette 1 | Recette 2 |
|---|---|---|
| Maltodextrine GLUCIDEX® IT 19 de ROQUETTE FRERES | 4 | 4 |
| Huile de tournesol | 2 | 2 |
| Sirop de Glucose | 19,17 | 19,17 |
| NUTRALYS® S85F | 3 | |
| Isolat protéines de pois selon l'invention n°2 | | 3 |
| Amidon de maïs, standard (ROQUETTE FRERES) | 0,500 | 0,500 |
| Amidon modifié de maïs CLEARAM® CR3020, (ROQUETTE FRERES) | 3,250 | 3,250 |
| Phosphate de calcium tribasique, Cal-Sistent (28280) | 0,280 | 0,280 |
| Sel | 0,030 | 0,030 |
| Extrait de Vanille (MANE M0055240) | 0,35 | 0,35 |
| Eau | 67,225 | 67,225 |
| Colorant liquide (NBC YELLOW C220 WSS) | 0,06 | 0,06 |
| Total | 100 | 100 |

Les quantités étant données en pourcentage en poids.

Les valeurs nutritionnelles pour 100 g sont les suivantes :

| | | |
|---|---|---|
| Energie calorique (kcal) | 134 | 134 |
| Matières grasses (g) | 2,3 | 2,3 |
| Hydrates de carbone (g) | 26,1 | 26,1 |
| Protéine (g) | 2,4 | 2,4 |
| Sel (g) | 0,14 | 0,17 |
| Calcium (mg) | 130 | 128 |

Le procédé de fabrication des crèmes desserts est le suivant :

- hydrater les protéines dans de l'eau à 55°C pendant 30 minutes avec un mélangeur Silverson (3500 trs/min) ;
- Ajouter le sirop et le calcium, attendre 5 minutes et ensuite ajouter les autres poudres
- Ajouter le colorant
- Ajouter l'huile de tournesol à une vitesse maximale (10000 trs/min) avec un mélangeur Silverson pendant 5 minutes ;
- Placer le produit dans un homogénéisateur à haute pression à 100 bars à 57°C ;
- Stériliser à 135°C pendant 55 secondes à 20L/h ;
- Refroidir à environ 75°C ;
- Stocker à 4°C.

*Analyse sensorielle*

Le panel est constitué de 12 personnes.

Le panel est, comme dans les exemples précédents, qualifié à la dégustation de produits formulés avec la protéine de pois. Il a reçu une formation et un entraînement afin de vérifier ses performances en termes de :

- Capacité à discriminer les produits
- Consensus, utilisation correcte des descripteurs
- Répétabilité, capacité à repérer un doublon.

Conditions de dégustation : au laboratoire d'analyse sensorielle : box individuels de dégustation, murs blancs, ambiance calme (pour faciliter la concentration), lumière blanche (pour avoir la même vision du produit), en fin de matinée, entre 10h et 12h (pour être au maximum des capacités sensorielles). Les produits sont anonymés par un code à 3 chiffres et présentés dans un ordre aléatoire (pour éviter les effets d'ordre et de rémanence) à afin d'éviter tout effet de saturation. Les juges ont commencé aléatoirement par l'un ou l'autre des deux tests. Les produits ont été évalués à J+8jours à 4°C en sortie du frigo.

Les résultats de l'analyse sensorielle sont présentés dans la figure 14. Les juges ont trouvé que la crème dessert préparée avec l'isolat de protéine de pois selon l'invention avait beaucoup moins le goût de pois et était plus épaisse et plus crémeuse que celle préparée avec la protéine de pois NUTRALYS® S85F.

*Mesure de la viscosité*

La viscosité des crèmes desserts selon les deux recettes a été mesurée. La caractérisation a été faite à J+3 et J+7.

| | Température de mesure : 13°C |
|---|---|
| Rhéomètre : | Physica MCR 301 Anton Paar |
| Géométrie : | CC27 |
| méthode : | 0 à 350 $s^{-1}$ en 180 s et retour de 350 $s^{-1}$ à 0 en 180 s |

| | **Viscosity (Pa.s)** | | | | | **Surface d'hystérésis** |
|---|---|---|---|---|---|---|
| | **5 s-1** | **10 s-1** | **40 s-1** | **100 s-1** | **350s-1** | **(Pa)** |
| **Recette 1 J+3** | 4,88 | 2,94 | 1,29 | 0,71 | 0,35 | 1559 |
| **Recette 1+7** | 3,79 | 2,31 | 1,05 | 0,59 | 0,30 | 961 |
| **Recette 2 J+3** | 5,70 | 3,42 | 1,43 | 0,84 | 0,42 | 2897 |
| **Recette 2 J+7** | 8,50 | 5,01 | 2,08 | 1,27 | 0,64 | 4919 |

La recette avec le NUTRALYS® S85F présente un niveau de viscosité plus faible que la recette préparée avec l'isolat de protéine de pois selon la présente invention.

## Revendications

1. Formulation nutritionnelle sélectionnée parmi un lait fermenté de type yaourt, une crème, une crème dessert, un dessert glacé ou sorbet et un fromage et contenant un isolat de protéines de pois, **caractérisé en ce que** l'isolat de protéines de pois :

   o présente entre 0,5 et 2 % d'acides aminés libres, le taux d'acides aminés libres étant déterminé selon la norme NF EN ISO13903:2005,
   o présente une viscosité à 20 °C dans l'eau à 15 % de matière sèche:

   - de 11 à 18.$10^{-3}$ Pa.s. à un taux de cisaillement de 10 $s^{-1}$,
   - de 9 à 16.$10^{-3}$ Pa.s. à un taux de cisaillement à 40 $s^{-1}$, et
   - de 8 à 16.$10^{-3}$ Pa.s. à un taux de cisaillement de 600 $s^{-1}$, la viscosité étant déterminée en rhéomètre présentant une géométrie à cylindres concentriques avec un taux de cisaillement de 0,6 $10^{-3}$ à 600 $s^{-1}$ en 3 minutes,

   o présente une solubilité dans l'eau, à 20°C :

   - de 30 à 40 % dans des zones de pH de 4 à 5
   - de 40 à 70 % dans des zones de pH de 6 à 8,

   o présente un degré d'hydrolyse (DH) compris entre 5 et 10 %, le degré d'hydrolyse étant déterminé selon la méthode de détermination de l'azote aminé décrite dans la description,

dans laquelle l'isolat de protéines de poids représente 0,1-60% en poids de la formulation nutritionnelle.

2. Formulation selon la revendication 1, **caractérisé en ce que** l'isolat de protéines de pois présente une digestibilité exprimée selon le Coefficient d'Utilisation Digestive (CUD) d'une valeur comprise entre 93,5 et 95 %.

3. Formulation selon l'une quelconque des revendications 1 à 2, **caractérisé en ce que** l'isolat de protéines de pois est présenté, selon le test SIMPHYD, comme une protéine de « viscosité rapide », traduisant une assimilation duodénale rapide des acides aminés constitutifs dudit isolat.

4. Formulation selon l'une quelconque des revendications 1 à 3, dans laquelle l'isolat de protéines de pois représente 0,1-10% en poids de la formulation nutritionnelle, de préférence de 0,5-6% en poids.

5. Formulation selon l'une quelconque des revendications 1 à 3, dans laquelle l'isolat de protéines de poids représente 1-50%, 1-20% ou 1-10% en poids de la formulation nutritionnelle.

6. Formulation selon l'une quelconque des revendications 1 à 3, dans laquelle l'isolat de protéines de pois représente 20-30%, 40-50%, 50-60%, 60-70%, 70-80%, 80-90% ou 90-100% en poids de la protéine totale dans la formulation nutritionnelle.

7. Formulation selon l'une quelconque des revendications 1 à 4, comprenant en outre au moins une protéine de lait.

8. Formulation nutritionnelle selon la revendication 7, dans laquelle la formulation est en poudre et comprend au moins un isolat de protéines de pois et au moins une protéine de lait, où la protéine de lait représente au moins 10, 15, 20, 25, 30, 40, 45, 50, 60, 70 ou 80 % en poids par rapport au poids total de protéines.

9. Formulation selon l'une quelconque des revendications 1-8, dans laquelle l'isolat de protéine de pois représente :

o entre 0,1 % et 100 % de la protéine totale pour les laits fermentés de type yaourts,
o entre 0,1 % et 100 % de la protéine totale pour les crèmes laitières, desserts glacés ou sorbets,
o entre 50 et 100 % de la protéine totale pour les coffee whiteners.

10. Utilisation de la formulation nutritionnelle selon l'une quelconque des revendications 1-9 comme source protéique unique ou comme complément alimentaire, destiné aux nourrissons, enfants et/ou adultes.

**Patentansprüche**

1. Nährstoffformulierung, gewählt aus fermentierter Milch vom Typ Joghurt, Creme, Dessertcreme, Eisdessert oder Sorbet und Käse, die ein Erbsenproteinisolat enthält, **dadurch gekennzeichnet, dass** das Erbsenproteinisolat:

o zwischen 0,5 und 2 % freie Aminosäuren enthält, wobei der Gehalt an freien Aminosäuren nach der Norm NF EN ISO 13903:2005 bestimmt wird,
o eine Viskosität bei 20 °C in Wasser mit 15 % Trockenmasse aufweist:

- von 11 bis 18.$10^{-3}$ Pa.s bei einer Schergeschwindigkeit von 10 $s^{-1}$,
- von 9 bis 16.$10^{-3}$ Pa.s bei einer Schergeschwindigkeit von 40 $s^{-1}$, und
- von 8 bis 16.$10^{-3}$ Pa.s bei einer Schergeschwindigkeit von 600 $s^{-1}$,

wobei die Viskosität in einem Rheometer mit einer Geometrie aus konzentrischen Zylindern bei einer Schergeschwindigkeit von 0,6 $10^{-3}$ bis 600 $s^{-1}$ in 3 Minuten bestimmt wird,

o eine Wasserlöslichkeit bei 20 °C aufweist:

- von 30 bis 40 % in Bereichen von pH 4 bis 5
- von 40 bis 70 % in Bereichen von pH 6 bis 8,

o einen Hydrolysegrad (DH) zwischen 5 und 10 % aufweist, wobei der Hydrolysegrad nach der in der Beschreibung beschriebenen Methode zur Bestimmung des Aminostickstoffs bestimmt wird,

wobei das Proteinisolat 0,1 bis 60 Gew.-% der Nährstoffformulierung ausmacht.

2. Formulierung nach Anspruch 1, **dadurch gekennzeichnet, dass** das Erbsenproteinisolat eine Verdaulichkeit, ausgedrückt als Verdauungsnutzungskoeffizient (CUD), von 93,5 bis 95 % aufweist.

3. Formulierung nach einem der Ansprüche 1 bis 2, **dadurch gekennzeichnet, dass** das Erbsenproteinisolat nach dem SIMPHYD-Test als Protein mit "schneller Viskosität" dargestellt wird, was eine schnelle duodenale Assimilation der Aminosäuren, aus denen das Isolat besteht, widerspiegelt.

4. Formulierung nach einem der Ansprüche 1 bis 3, wobei das Erbsenproteinisolat 0,1 bis 10 Gew.-% der Nährstoffformulierung ausmacht, bevorzugt 0,5 bis 6 Gew.-%.

5. Formulierung nach einem der Ansprüche 1 bis 3, wobei das Proteinisolat 1 bis 50 Gew.-%, 1 bis 20 Gew.-% oder 1 bis 10 Gew.-% der Nährstoffformulierung ausmacht.

6. Formulierung nach einem der Ansprüche 1 bis 3, wobei das Erbsenproteinisolat 20 bis 30 %, 40 bis 50 %, 50 bis 60 %, 60 bis 70 %, 70 bis 80 %, 80-90 % oder 90-100 % des Gesamtproteins in der Nährstoffformulierung ausmacht.

7. Formulierung nach einem der Ansprüche 1 bis 4, die zusätzlich mindestens ein Milchprotein enthält.

8. Nährstoffformulierung nach Anspruch 7, wobei die Formulierung in Pulverform vorliegt und mindestens ein Erbsenproteinisolat und mindestens ein Milchprotein enthält, wobei das Milchprotein mindestens 10, 15, 20, 25, 30, 40, 45, 50, 60, 70 oder 80 Gew.-% des Gesamtproteingehalts ausmacht.

9. Formulierung nach einem der Ansprüche 1 bis 8, wobei das Erbsenproteinisolat ausmacht:

o zwischen 0,1 % und 100 % des Gesamtproteins für fermentierte Milchprodukte vom Typ Joghurt,
o zwischen 0,1 % und 100 % des Gesamtproteins für Milchcremes, Eisdesserts oder Sorbets,
◦ zwischen 50 und 100 % des Gesamtproteins für Kaffeeweißer.

10. Verwendung der Nährstoffformulierung nach einem der Ansprüche 1 bis 9 als einzige Proteinquelle oder als Nahrungsergänzungsmittel für Säuglinge, Kinder und/oder Erwachsene.

## Claims

1. A nutritional formulation selected from a fermented milk of yoghurt type, a cream, a dessert cream, an iced dessert or sorbet and a cheese and containing a pea protein isolate, **characterized in that** the pea protein isolate:

o contains between 0.5 and 2% of free amino acids, the free amino acids content being determined according to standard NF EN ISO13903:2005
o has a viscosity at 20°C in water at 15% solids:

- from 11 to $18\times10^{-3}$ Pa.s. at a shear rate of 10 $s^{-1}$,
- from 9 to $16\times10^{-3}$ Pa.s. at a shear rate of 40 $s^{-1}$, and
- from 8 to $16\times10^{-3}$ Pa.s. at a shear rate of 600 $s^{-1}$, the viscosity being determined by a rheometer having concentric cylinder geometry with a shear rate of $0.6\times10^{-3}$ at 600 $s^{-1}$ in 3 minutes,

◦ has a solubility in water, at 20°C:

- from 30 to 40% in pH zones from 4 to 5
- from 40 to 70% in pH zones from 6 to 8;

o has a degree of hydrolysis (DH) of between 5 and 10%, the degree of hydrolysis being determined by the method for determining the amino nitrogen described in the description,

in which the pea protein isolate represents 0.1-60% by weight of the nutritional formulation.

2. The formulation as claimed in claim 1, **characterized in that** the pea protein isolate has a digestibility expressed according to the Coefficient of Digestive Use (CDU) of between 93.5 and 95%.

3. The formulation as claimed in any one of claims 1 to 2, **characterized in that** the pea protein isolate is presented, according to the SYMPHID test, as a protein of "rapid viscosity", reflecting rapid duodenal assimilation of the constituent amino acids of said isolate.

4. The formulation as claimed in any one of claims 1 to 3, in which the pea protein isolate represents 0.1-10% by weight of the nutritional formulation, preferably from 0.5-6% by weight.

5. The formulation as claimed in any one of claims 1 to 3, in which the pea protein isolate represents 1-50%, 1-20% or 1-10% by weight of the nutritional formulation.

6. The formulation as claimed in any one of claims 1 to 3, in which the pea protein isolate represents 20-30%, 40-50%, 50-60%, 60-70%, 70-80%, 80-90% or 90-100% by weight of the total protein in the nutritional formulation.

7. The formulation as claimed in any one of claims 1 to 4, also comprising at least one milk protein.

8. The nutritional formulation as claimed in claim 7, in which the formulation is in powder form and comprises at least one pea protein isolate and at least one milk protein, in which the milk protein represents at least 10, 15, 20, 25, 30, 40, 45, 50, 60, 70 or 80% by weight relative to the total weight of protein.

9. The formulation as claimed in any one of claims 1-8, in which the pea protein isolate represents:

   o between 0.1% and 100% of the total protein for the fermented milks of yoghurt type,
   o between 0.1% and 100% of the total protein for the dairy creams, iced desserts or sorbets,
   o between 50 and 100% of the total protein for the coffee whiteners.

10. The use of the nutritional formulation as claimed in any one of claims 1-9, as a single protein source or as a food supplement, intended for infants, children and/or adults.

# Figure 1

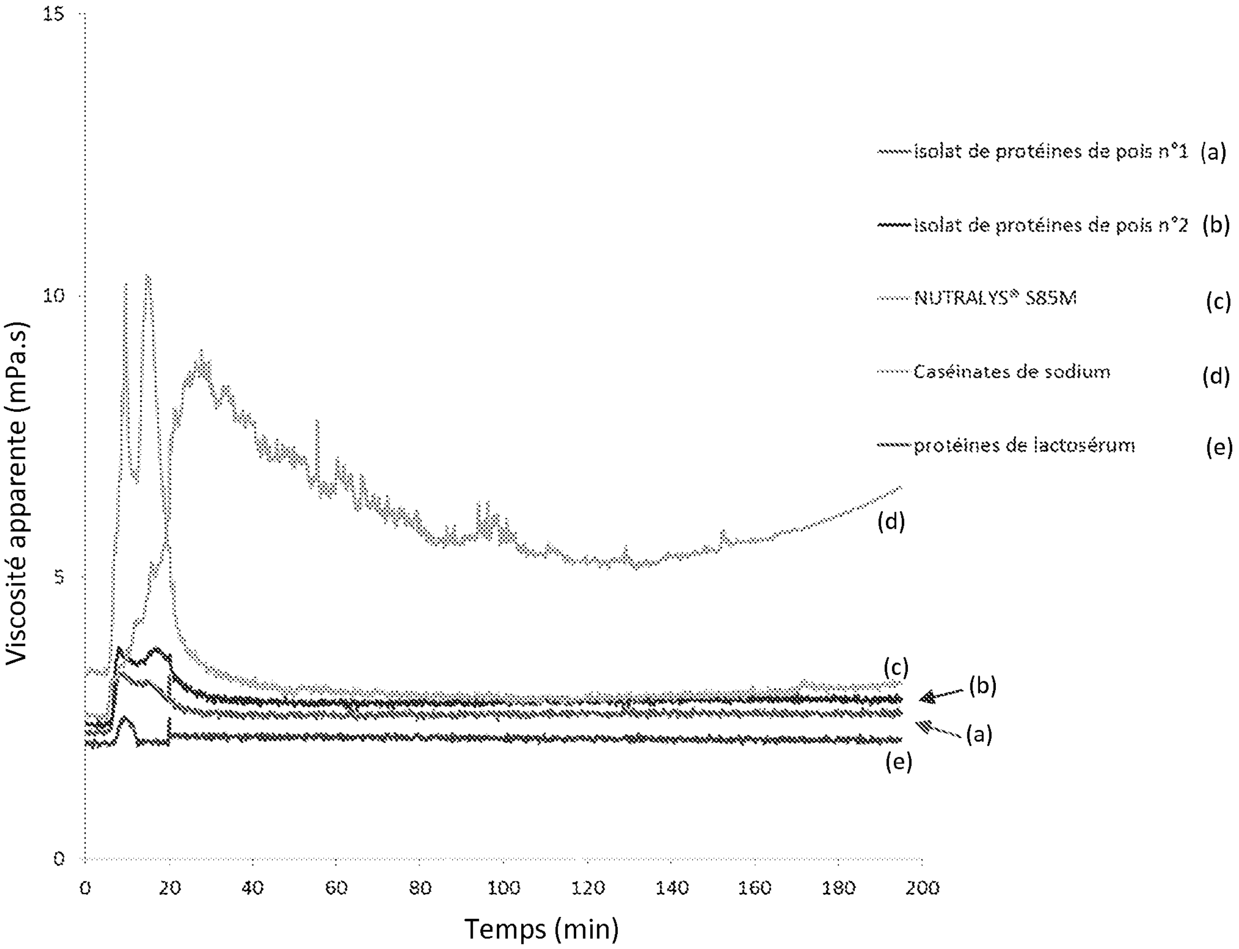
15
10
5
0
Viscosité apparente (mPa.s)
0
20
40
60
80
100
120
140
160
180
200
Temps (min)
isolat de protéines de pois n°1 (a)
isolat de protéines de pois n°2 (b)
NUTRALYS® S85M (c)
Caséinates de sodium (d)
protéines de lactosérum (e)
(d)
(c)
(b)
(a)
(e)

## Figure 2

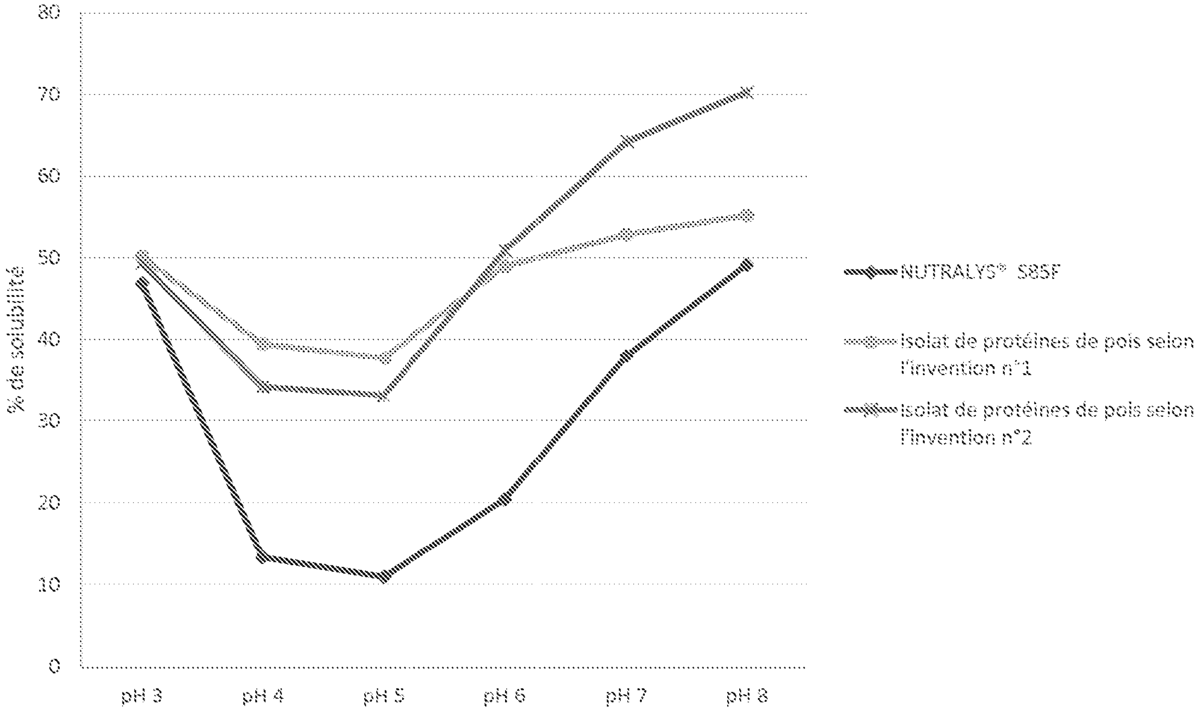


## Figure 3

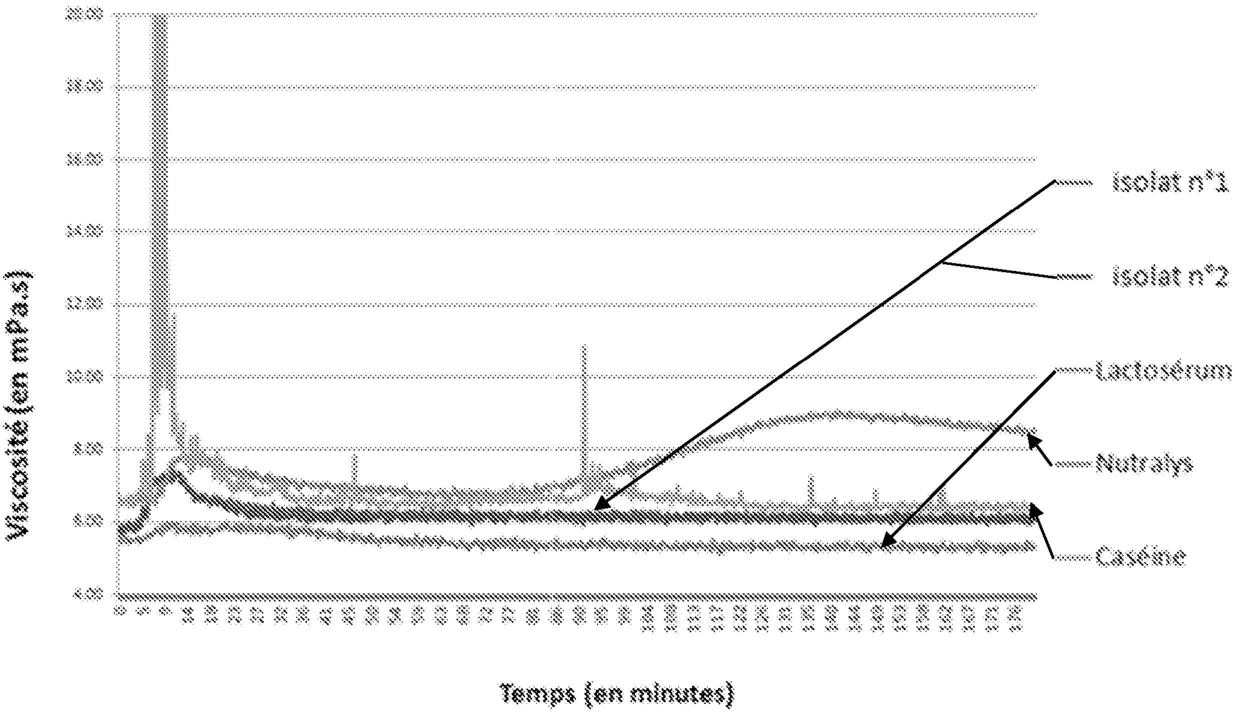

## Figure 4

Carte de facteur individuel

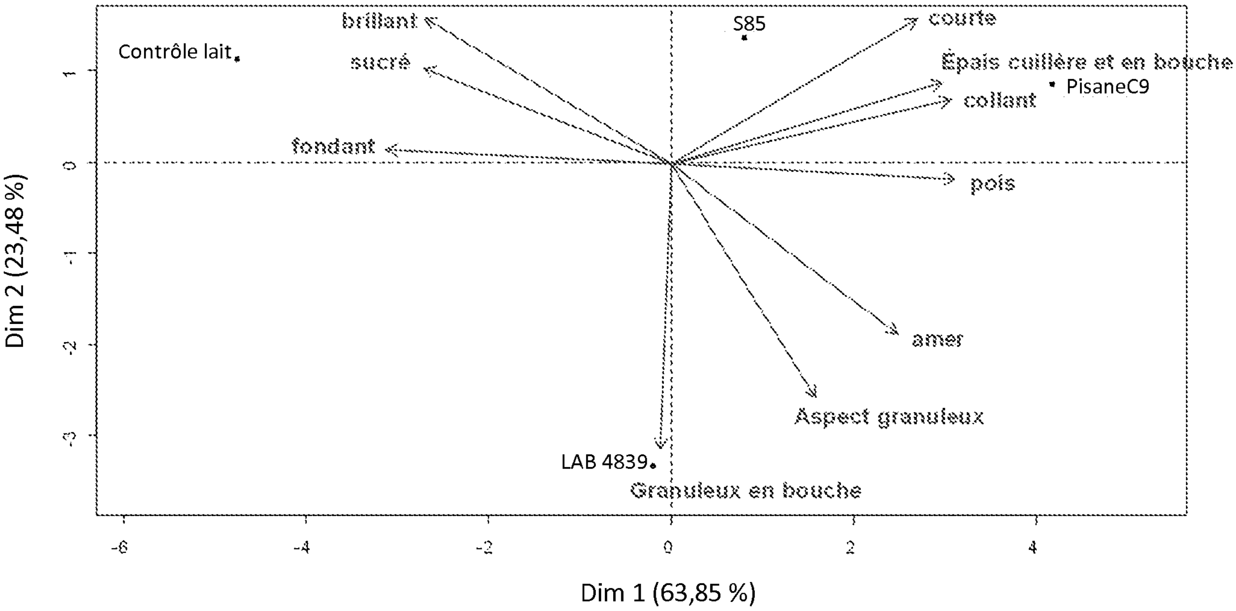


## Figure 5

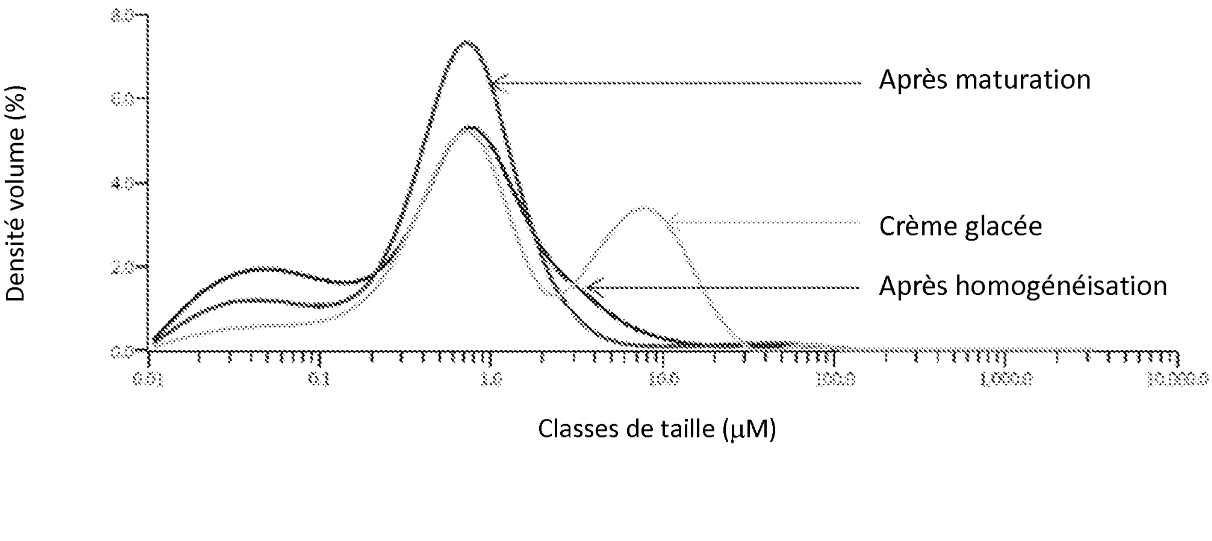

## Figure 6

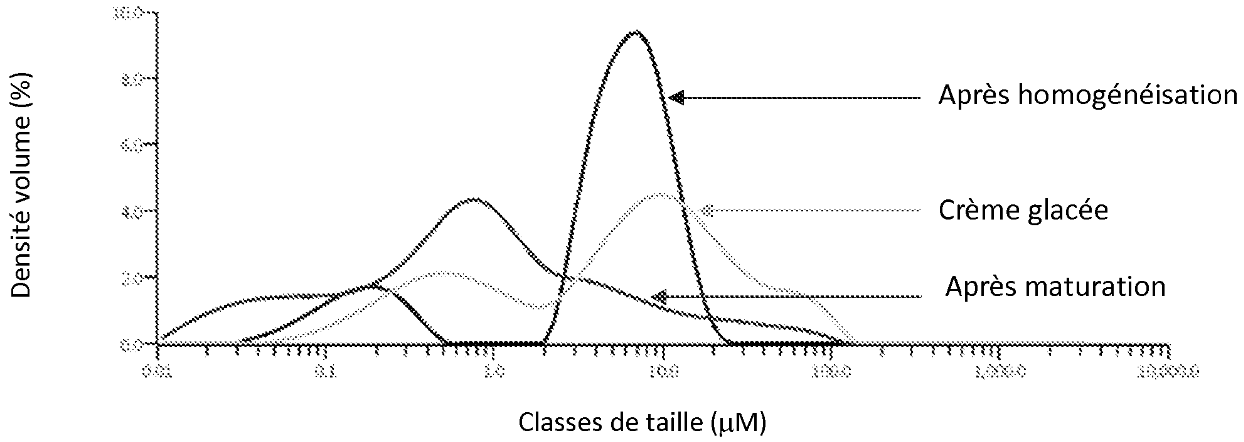


## Figure 7

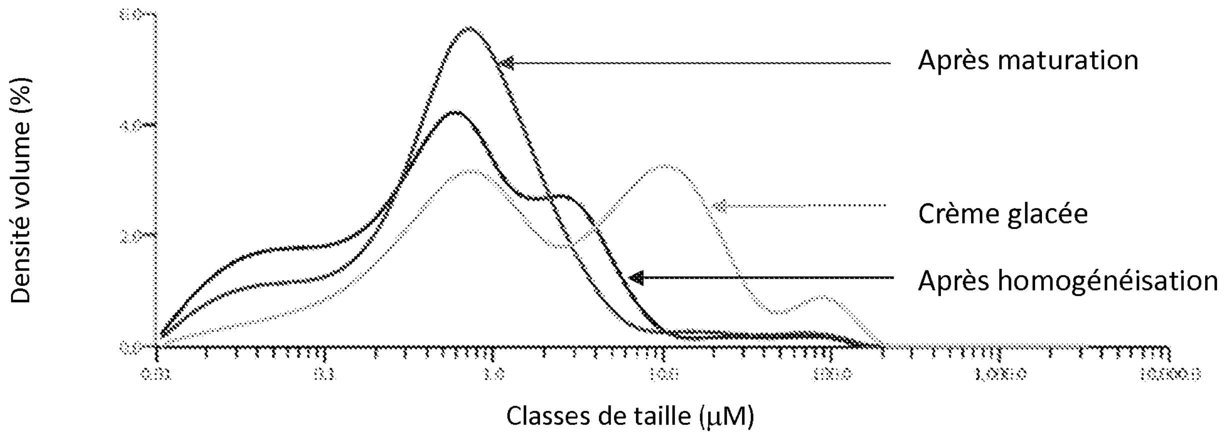


## Figure 8

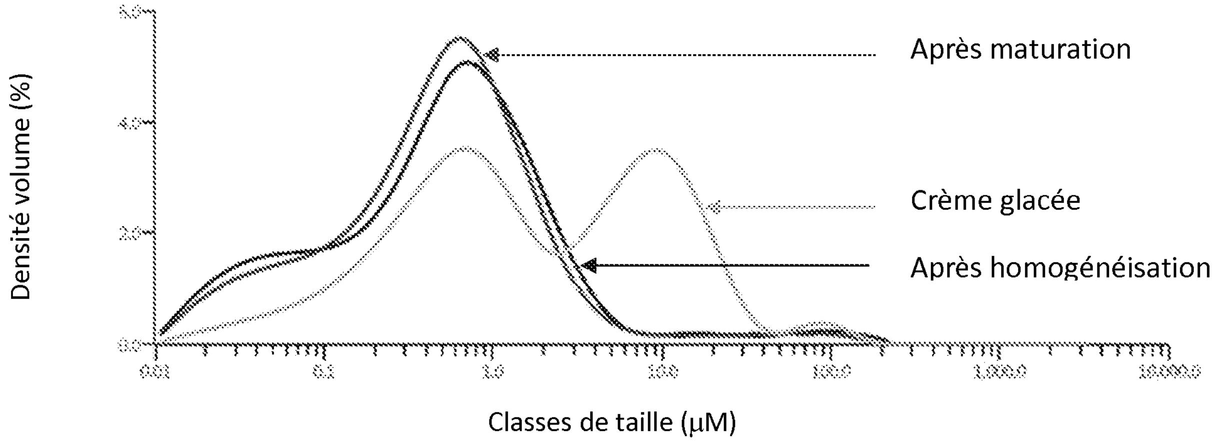

**Figure 9**

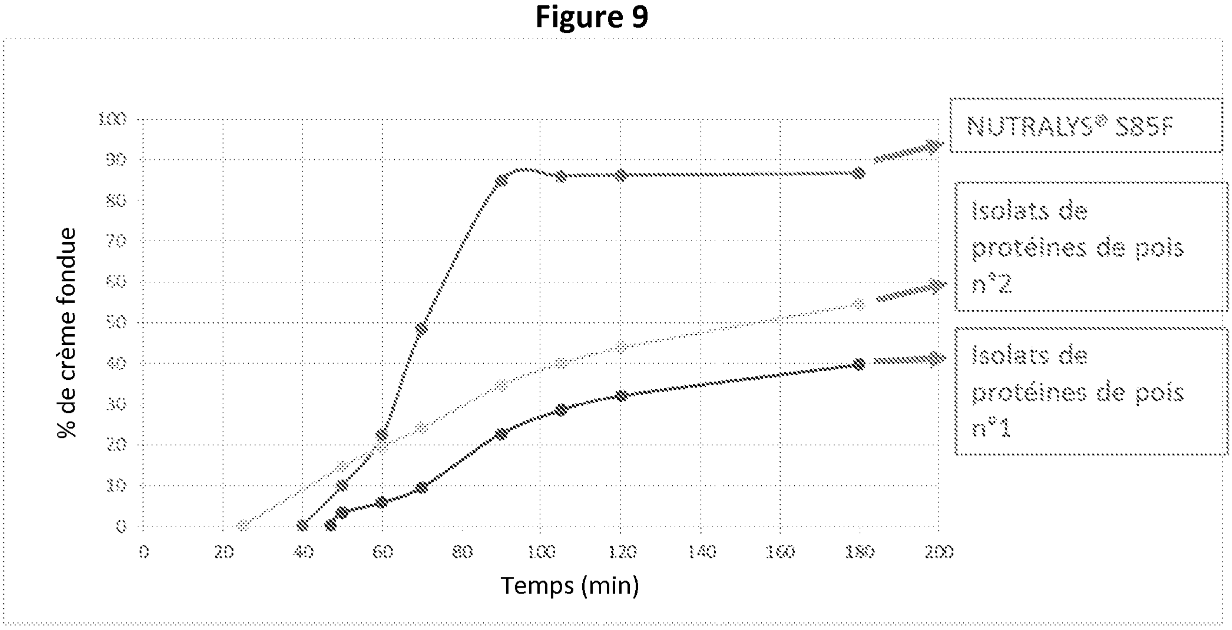


**Figure 10**

Carte de facteur individuel

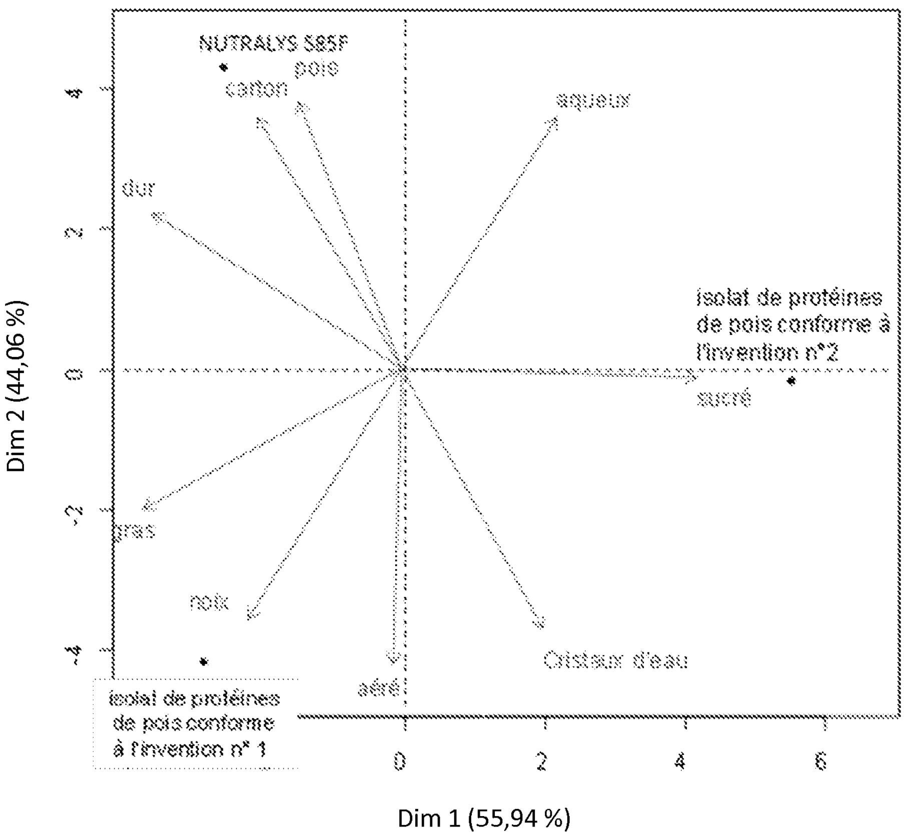

## Figure 11

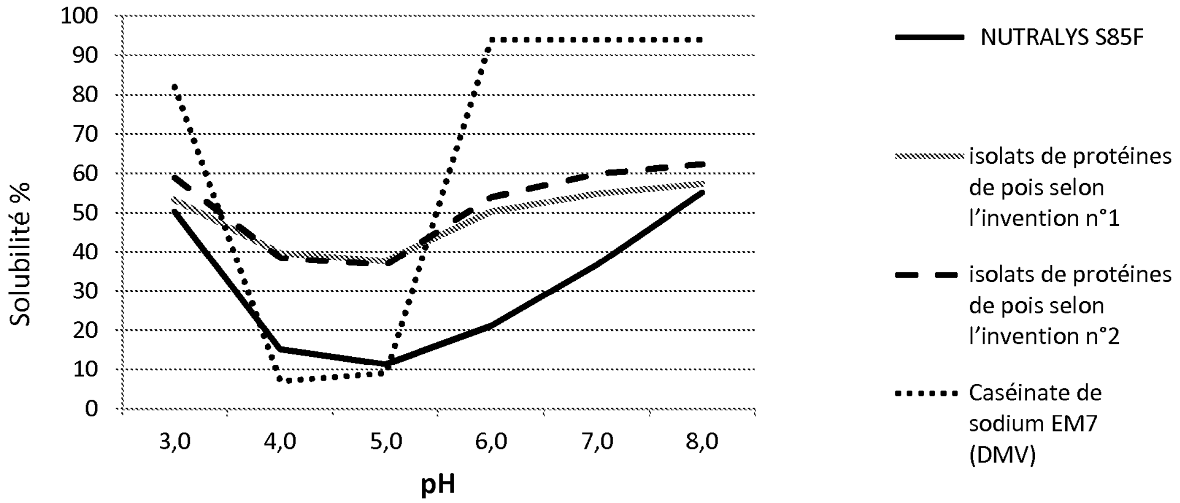


## Figure 12

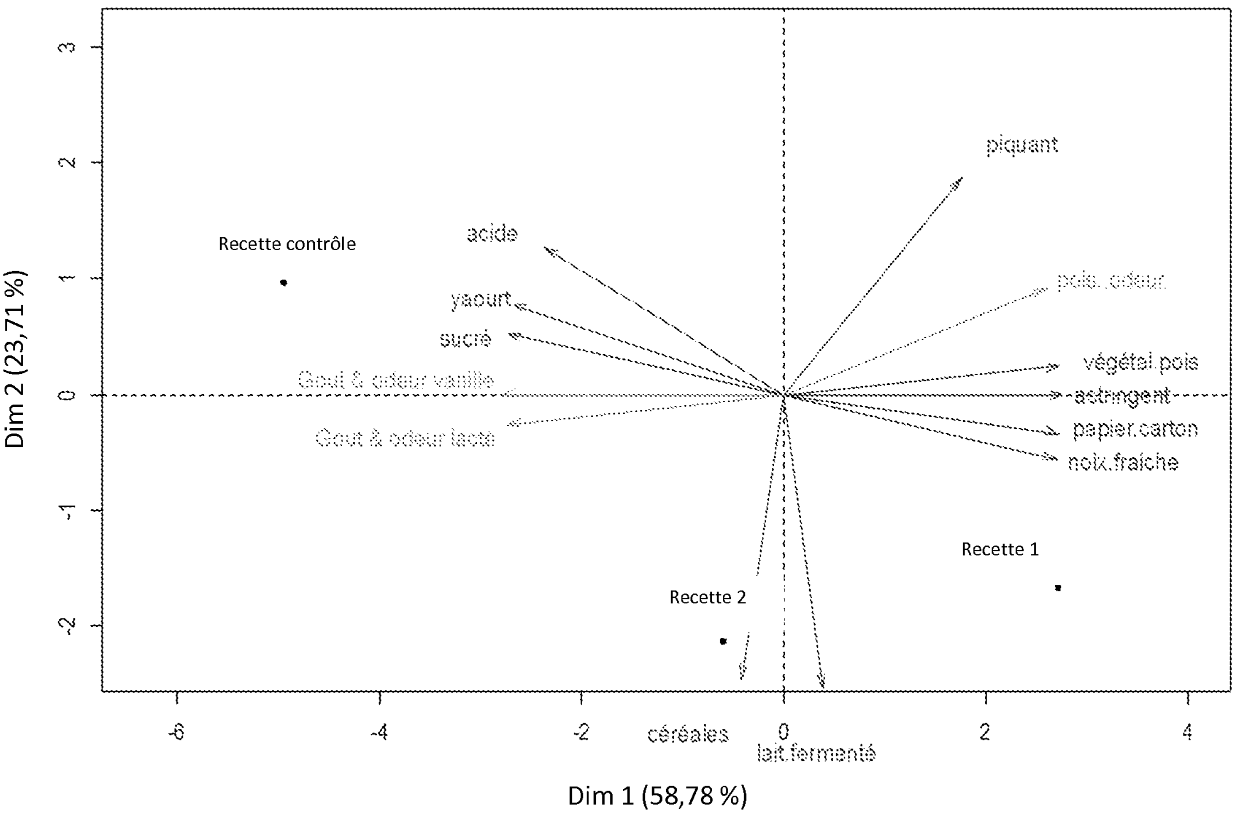

**Figure 13**

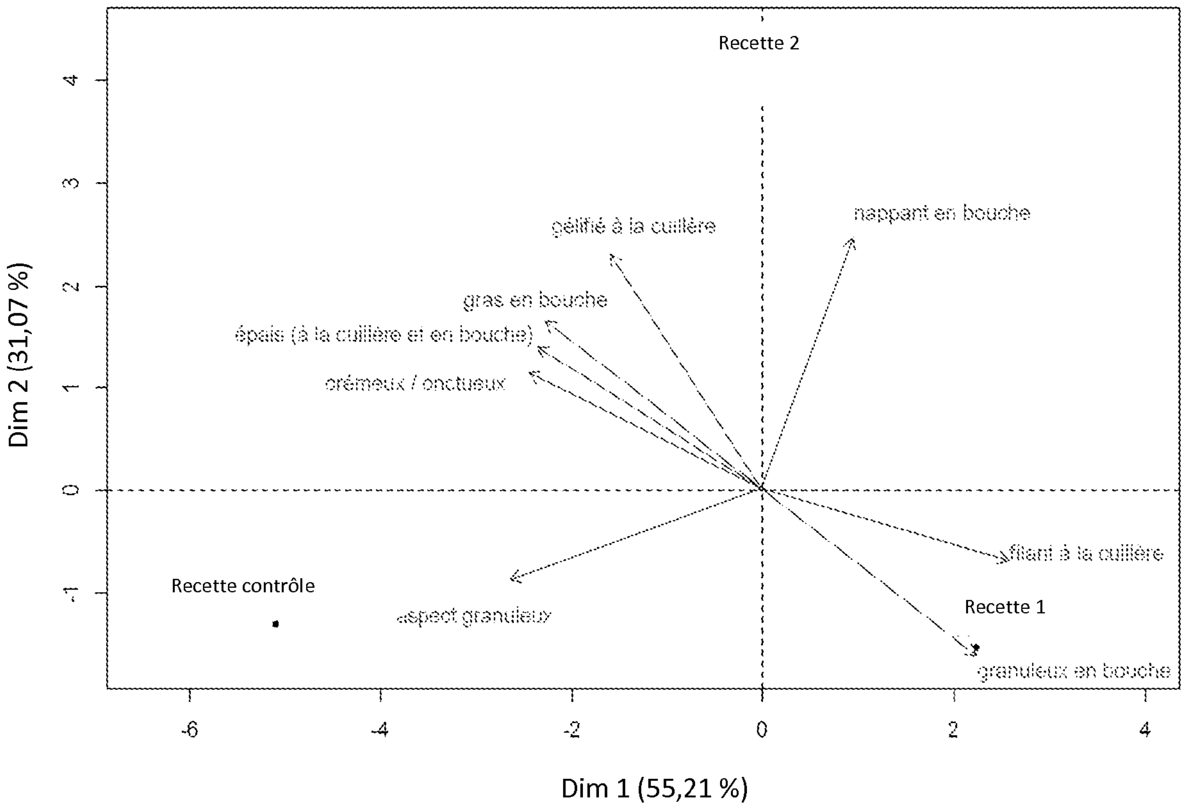


**Figure 14**

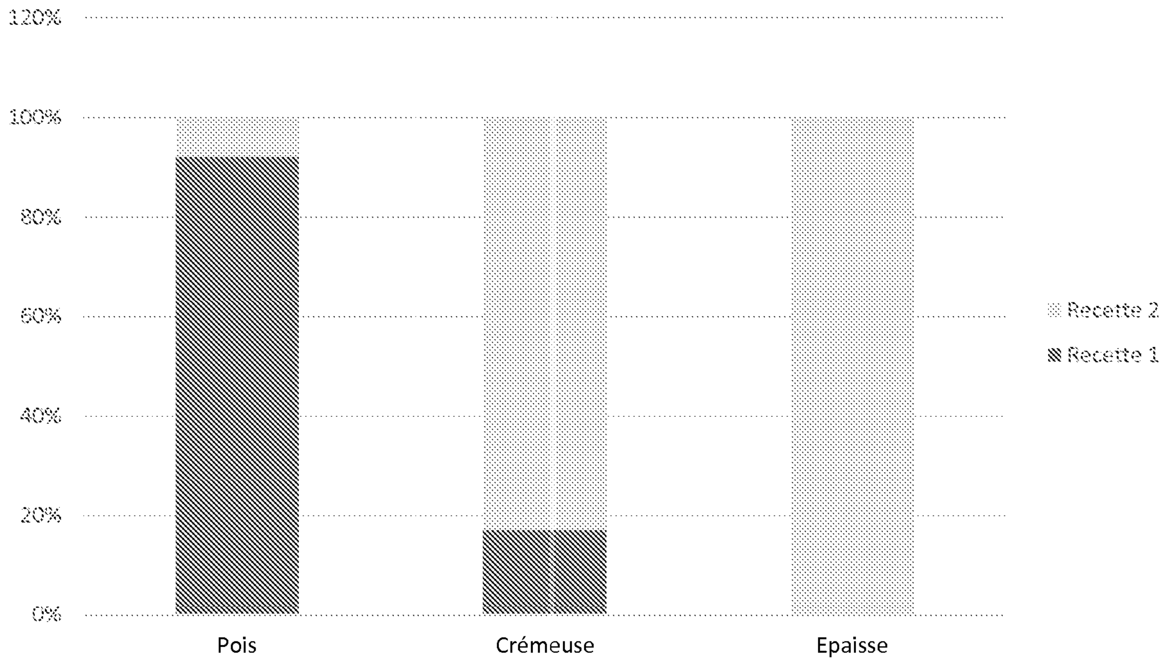

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 5520935 A
- WO 200717572 A
- WO 200717572 L


### Littérature non-brevet citée dans la description


- *Appl Environ Microbiol.*, January 2007, vol. 73 (2), 508-15
- **HALL et al.** Casein and whey exert different effects on plasma amino acid profiles, gastrointestinal hormone secretion ans appetite. *Br. J. Nutr.*, 2003, vol. 89, 239-248